# EUROPEAN PATENT APPLICATION

(11) **EP 4 529 269 A1**
(43) Date of publication of application: **26.03.2025**
(21) Application number: 23823078.3
(22) Date of filing: 12.06.2023
(51) Int. Cl.: H04W 36/00

(54) **CELL HANDOVER METHOD AND COMMUNICATION DEVICE**

(30) Priority: 16.06.2022 CN 202210689133
(71) Applicant: Huawei Technologies Co., Ltd., Shenzhen, Guangdong 518129 (CN)
(72) Inventor: DONG, Lei, Shenzhen, Guangdong 518129 (CN); ZHANG, Liqing, Shenzhen, Guangdong 518129 (CN); TANG, Hao, Shenzhen, Guangdong 518129 (CN)
(74) Representative: Isarpatent
(86) International application number: PCT/CN2023/099681
(87) International publication number: WO 2023/241510

(57) **Abstract**

This application provides a cell handover method and a communication apparatus. In a process in which cell handover is performed on a terminal device, the terminal device reports, to a network device, information (expected handover information) specific to a terminal device side. When determining whether to perform handover, the network device makes a decision with reference to the information specific to the terminal device side, and controls a cell handover procedure. In this way, a success probability and efficiency of the cell handover can be improved. For example, the expected handover information includes content of at least one of the following information or a value of at least one of the following parameters: an expected handover time, an expected handover location, an expected handover policy, an expected handover latency, and an expected rate of data transmission during the handover that are determined by the terminal device.

## Description

This application claims priority to Chinese Patent Application No. 202210689133.9, filed with the China National Intellectual Property Administration on June 16, 2022 and entitled "CELL HANDOVER METHOD AND COMMUNICATION APPARATUS", which is incorporated herein by reference in its entirety.

### TECHNICAL FIELD

This application relates to the communication field, and more specifically, to a cell handover method and a communication apparatus.

### BACKGROUND

Because a location of a user often changes, after the location of the user changes, a terminal device used by the user may enter, from a cell range covered by a network device (for example, a base station), a cell range covered by another network device. In this case, cell handover needs to be performed on the terminal device. To be specific, the terminal device is handed over from a cell that currently serves the terminal device to another cell.

An existing cell handover process is controlled by a source network device. After receiving a handover measurement report of the terminal device, the source network device determines whether to send a handover request to a target network device. In a current cell handover procedure, the source network device does not consider information specific to the terminal device, and inaccurately determines the handover procedure. Consequently, the cell handover may fail, and a success probability of the cell handover cannot be ensured.

### SUMMARY

This application provides a cell handover method and a communication apparatus, to improve a success probability and efficiency of cell handover.

According to a first aspect, a cell handover method is provided. The method may be performed by a terminal device or a chip used in the terminal device. The method includes: sending, to a first network device, expected handover information and a measurement result that are determined by the terminal device; and receiving first information sent by the first network device, where the first information is used by the terminal device to access a second network device.

According to the cell handover method provided in the first aspect, in a process in which cell handover is performed on the terminal device, the terminal device reports, to the network device, the expected handover information determined by the terminal. When determining whether to perform handover, the network device makes a decision with reference to the expected handover information of the terminal device, so that a handover procedure can be more accurately controlled, to improve a success probability of the handover. For example, the network device can be enabled to more accurately determine a handover time, to more accurately control a sending time point of each piece of signaling in the handover procedure; and the network device can be enabled to select a handover policy that better matches the terminal device, to improve the success probability of the handover and efficiency of the handover.

In a possible implementation, the expected handover information includes content of at least one of the following information or a value of at least one of the following parameters: an expected handover time, an expected handover location, an expected handover policy, an expected handover latency, and an expected rate of data transmission during handover that are determined by the terminal device. Each of the expected handover time, the expected handover location, the expected handover policy, the expected handover latency, and the expected rate of the data transmission during the handover may be understood as one type of information (which may also be referred to as an information type or an information category) or parameter (which may also be referred to as a parameter type or a parameter category). In this implementation, the first network device may determine, based on the content included in the expected handover information, whether to perform handover, and the handover time, a handover policy, a handover latency, a data transmission rate, and the like used during the handover. In this way, the network device can be enabled to more accurately determine the handover time, to more accurately control the sending time point of each piece of signaling in the handover procedure; and the network device can be enabled to select the handover policy that better matches the terminal device, to improve the success probability of the handover and the efficiency of the handover.

In a possible implementation, the expected handover information further includes content of at least one of the following information or a value of at least one of the following parameters: movement information predicted by the terminal device, a power of the terminal device, and a state of energy of the terminal device. Each of the movement information predicted by the terminal device, the power of the terminal device, and the state of energy of the terminal device may be understood as one type of information or parameter. In this implementation, the first network device may determine, based on the movement information predicted by the terminal device and the power of the terminal device, whether to perform handover. The first network device may further determine, based on a value of the state of energy of the terminal device, whether to perform handover and the handover time, so that the handover procedure can be more accurately controlled, to improve the success probability of the handover.

In a possible implementation, the expected handover information further includes content of at least one of the following information or a value of at least one of the following parameters: handover reliability, a probability of the expected handover time, a probability of the expected handover location, a probability of the expected handover policy, a probability of the expected handover latency, and a probability of the expected rate of the data transmission during the handover. Each of the handover reliability, the probability of the expected handover time, the probability of the expected handover location, the probability of the expected handover policy, the probability of the expected handover latency, and the probability of the expected rate of the data transmission during the handover may be understood as one type of information or parameter. In this implementation, the first network device may determine an actual rate of the data transmission during the handover based on the probability of the expected rate of the data transmission during the handover, may determine the handover latency based on the probability of the expected handover latency, may determine, based on the handover reliability, whether to perform handover, may determine the handover time based on the probability of the expected handover time, may determine a handover location based on the probability of the expected handover location, may determine the handover time based on the probability of the expected handover time, may determine the handover policy based on the probability of the expected handover policy, and so on, so that the handover procedure can be more accurately controlled, to improve the success probability of the handover.

For example, the first information may be an RRC reconfiguration (RRC Reconfiguration) message.

For example, the measurement result may include related a parameter of a link between the terminal device and the first network device, for example, may include channel quality of the link, reference signal received powers RSRPs, reference signal received quality RSRQ, signal to interference plus noise ratios SINRs, and received signal strength indications RSSIs that are measured based on different reference signals (for example, a CSI-RS, an SRS, and an SSB), and whether a trigger condition corresponding to the handover procedure is satisfied.

In a possible implementation, the method further includes: determining the expected handover information by using an artificial intelligence model and/or a sensing model. In this implementation, the expected handover information is obtained by using the artificial intelligence model and/or the sensing model, so that accuracy of the expected handover information can be improved, complexity of obtaining the expected handover information can be reduced, and the implementation is easy.

In a possible implementation, before the sending, to a first network device, expected handover information, the method further includes: receiving indication information from the first network device, where the indication information indicates the terminal device to send the expected handover information to the first network device. In this implementation, the terminal device can be enabled to determine that the expected handover information needs to be reported.

In a possible implementation, the indication information indicates a type of the expected handover information. In this implementation, the expected handover information reported by the terminal device is expected handover information needed by the network device, so that the accuracy of the expected handover information reported by the terminal device can be improved, and more accurate control of the network device on the handover procedure can be further implemented, to further improve the success probability of the cell handover.

For example, the type of the expected handover information may be understood as the information type or the parameter included in the expected handover information. For example, the information type or the parameter included in the expected handover information may include at least one of the expected handover time, the expected handover location, the expected handover policy, the expected handover latency, the expected rate of the data transmission during the handover, the movement information predicted by the terminal device, the power of the terminal device, the state of energy of the terminal device, the handover reliability, the probability of the expected handover time, the probability of the expected handover location, the probability of the expected handover policy, the probability of the expected handover latency, and the probability of the expected rate of the data transmission during the handover.

In a possible implementation, the indication information includes a first parameter, and the first parameter is for determining the expected handover information. In this implementation, the terminal device may determine the expected handover information based on the first parameter, so that efficiency of obtaining the expected handover information can be improved, and the accuracy of the expected handover information can be ensured.

In a possible implementation, the first parameter includes a corresponding input parameter of the artificial intelligence model and/or a corresponding input parameter of the sensing model. In this implementation, the terminal device can quickly determine a value of the input parameter of the artificial intelligence model and/or a value of the input parameter of the sensing model, so that complexity of obtaining the corresponding input parameter of the artificial intelligence model and/or the corresponding input parameter of the sensing model by the terminal device is reduced, and the implementation is easy.

In a possible implementation, the method further includes: determining the expected handover information by using the artificial intelligence model and/or the sensing model based on a value of the corresponding input parameter of the artificial intelligence model and/or a value of the corresponding input parameter of the sensing model. In this implementation, the terminal device inputs the value of the input parameter of the artificial intelligence model and/or the value of the input parameter of the sensing model into the artificial intelligence model and/or the sensing model, to obtain an output parameter of the artificial intelligence model and/or an output parameter of the sensing model; and further obtains the expected handover information based on the output parameter of the artificial intelligence model and/or the sensing model. The accuracy of the expected handover information can be improved, the complexity of obtaining the expected handover information can be reduced, and the implementation is easy. In addition, the output parameter is obtained by using the intelligence model, and/or the output parameter is obtained by using the sensing model, so that the efficiency of obtaining the expected handover information can be improved.

In a possible implementation, the first parameter includes a corresponding output parameter of the artificial intelligence model and/or a corresponding output parameter of the sensing model. In this implementation, the terminal device can quickly determine the output parameter of the artificial intelligence model and/or the output parameter of the sensing model, and can select or configure an appropriate artificial intelligence model based on the output parameter, and/or select or configure an appropriate sensing model based on the output parameter, to obtain a value of the corresponding output parameter, so that processing complexity of the terminal device is reduced, and the accuracy of the expected handover information is ensured.

In a possible implementation, the method further includes: determining the expected handover information based on a value of the corresponding output parameter of the artificial intelligence model and/or a value of the corresponding output parameter of the sensing model. In this implementation, the terminal device obtains the expected handover information based on the value of the output parameter of the artificial intelligence model and/or the value of the output parameter of the sensing model. The accuracy of the expected handover information can be improved, the complexity of obtaining the expected handover information can be reduced, and the implementation is easy. In addition, the output parameter is obtained by using the intelligence model, and/or the output parameter is obtained by using the sensing model, so that the efficiency of obtaining the expected handover information can be improved.

In a possible implementation, the first parameter includes at least one of a location of the terminal device, a movement speed of the terminal device, a movement direction of the terminal device, the power of the terminal device, the state of energy of the terminal device, a channel state of the terminal device, and a service status of the terminal device. In this implementation, the terminal device uses the first parameter, so that the efficiency of obtaining the expected handover information can be improved, and the accuracy of the expected handover information can be ensured.

In a possible implementation, the first information includes at least one of information about a resource for data transmission between the terminal device and the second network device, information about a time-frequency resource for monitoring downlink control information by the terminal device, and synchronization information; and the method further includes: communicating data and control information with the second network device based on the first information. In this implementation, signaling communicated in a random access procedure is sent to the terminal device in advance, and the terminal device may skip the random access process between the terminal device and the second network device, so that the cell handover latency can be reduced, and the efficiency of the handover can be improved.

In a possible implementation, the synchronization information includes timing advance information.

According to a second aspect, a cell handover method is provided. The method may be performed by a network device or a chip used in the network device. The method includes: receiving a measurement report and expected handover information that is determined by a terminal device that are sent by the terminal device; determining, based on the measurement report and the expected handover information, to enable the terminal device to access a second network device; and sending first information to the terminal device, where the first information is used by the terminal device to access the second network device.

According to the cell handover method provided in the second aspect, when determining whether to perform handover, the network device makes a decision with reference to the expected handover information of the terminal device, so that a handover procedure can be more accurately controlled, to improve a success probability of the handover. For example, the network device can be enabled to more accurately determine a handover time, to more accurately control a sending time point of each piece of signaling in the handover procedure; and the network device can be enabled to select a handover policy that better matches the terminal device, to improve the success probability of the handover and efficiency of the handover.

For example, the first information may be an RRC reconfiguration (RRC Reconfiguration) message.

In a possible implementation, the expected handover information includes content of at least one of the following information or a value of at least one of the following parameters: an expected handover time, an expected handover location, an expected handover policy, an expected handover latency, and an expected rate of data transmission during handover that are determined by the terminal device. Each of the expected handover time, the expected handover location, the expected handover policy, the expected handover latency, and the expected rate of the data transmission during the handover may be understood as one type of information or parameter. In this implementation, a first network device may determine, based on the content included in the expected handover information, whether to perform handover, and the handover time, a handover policy, a handover latency, a data transmission rate, and the like used during the handover. In this way, the network device can be enabled to more accurately determine the handover time, to more accurately control the sending time point of each piece of signaling in the handover procedure; and the network device can be enabled to select the handover policy that better matches the terminal device, to improve the success probability of the handover and the efficiency of the handover.

In a possible implementation, the expected handover information further includes content of at least one of the following information or a value of at least one of the following parameters: movement information predicted by the terminal device, a power of the terminal device, and a state of energy of the terminal device. Each of the movement information predicted by the terminal device, the power of the terminal device, and the state of energy of the terminal device may be understood as one type of information or parameter. In this implementation, the first network device may determine, based on the movement information predicted by the terminal device and the power of the terminal device, whether to perform handover. The first network device may further determine, based on a value of the state of energy of the terminal device, whether to perform handover and the handover time, so that the handover procedure can be more accurately controlled, to improve the success probability of the handover.

In a possible implementation, the expected handover information further includes content of at least one of the following information or a value of at least one of the following parameters: handover reliability, a probability of the expected handover time, a probability of the expected handover location, a probability of the expected handover policy, a probability of the expected handover latency, and a probability of the expected rate of the data transmission during the handover. Each of the handover reliability, the probability of the expected handover time, the probability of the expected handover location, the probability of the expected handover policy, the probability of the expected handover latency, and the probability of the expected rate of the data transmission during the handover may be understood as one type of information or parameter. In this implementation, the first network device may determine an actual rate of the data transmission during the handover based on the probability of the expected rate of the data transmission during the handover, may determine the handover latency based on the probability of the expected handover latency, may determine, based on the handover reliability, whether to perform handover, may determine the handover time based on the probability of the expected handover time, may determine a handover location based on the probability of the expected handover location, may determine the handover time based on the probability of the expected handover time, may determine the handover policy based on the probability of the expected handover policy, and so on, so that the handover procedure can be more accurately controlled, to improve the success probability of the handover.

In a possible implementation, before the receiving a measurement report sent by the terminal device, the method further includes: sending indication information to the terminal device, where the indication information indicates the terminal device to send the expected handover information. In this implementation, the terminal device can be enabled to determine that the expected handover information needs to be reported.

In a possible implementation, the indication information indicates a type of the expected handover information. In this implementation, the expected handover information is expected handover information needed by the network device, so that accuracy of the expected handover information reported by the terminal device can be improved, and more accurate control of the network device on the handover procedure can be further implemented, to further improve the success probability of the cell handover.

For example, the type of the expected handover information may be understood as the information or the parameter included in the expected handover information.

In a possible implementation, the indication information includes a first parameter, and the first parameter is used by the terminal device to determine the expected handover information. In this implementation, efficiency of obtaining the expected handover information by the terminal device can be improved, and accuracy of the expected handover information can be ensured.

In a possible implementation, the first parameter includes a corresponding input parameter of an artificial intelligence model and/or a corresponding input parameter of a sensing model. In this implementation, complexity of obtaining the corresponding input parameter of the artificial intelligence model and/or the corresponding input parameter of the sensing model by the terminal device is reduced, and the implementation is easy.

In a possible implementation, the first parameter includes a corresponding output parameter of an artificial intelligence model and/or a corresponding output parameter of a sensing model. In this implementation, the terminal device can be enabled to quickly determine the output parameter of the artificial intelligence model and/or the output parameter of the sensing model, and select or configure an appropriate artificial intelligence model based on the output parameter, and/or select or configure an appropriate sensing model based on the output parameter, to obtain a value of the corresponding output parameter, so that processing complexity of the terminal device is reduced, and the accuracy of the expected handover information is ensured.

In a possible implementation, the first parameter includes at least one of a location of the terminal device, a movement speed of the terminal device, a movement direction of the terminal device, the power of the terminal device, the state of energy of the terminal device, a channel state of the terminal device, and a service status of the terminal device. In this implementation, the efficiency of obtaining the expected handover information by the terminal device can be improved, and the accuracy of the expected handover information can be ensured.

In a possible implementation, the first information includes at least one of information about a resource for data transmission between the terminal device and the second network device, information about a time-frequency resource for monitoring downlink control information by the terminal device, and synchronization information. In this implementation, the network device sends, to the terminal device in advance, signaling communicated in a random access process, and the terminal device may skip a random access process between the terminal device and the second network device, so that the cell handover latency can be reduced, and the efficiency of the handover can be improved.

In a possible implementation, the synchronization information includes timing advance information.

According to a third aspect, a communication apparatus is provided. The apparatus includes a module or a unit configured to perform each step in any one of the first aspect or the possible implementations of the first aspect. The module or the unit may be a hardware circuit, may be software, or may be implemented by the hardware circuit in combination with the software. The communication apparatus may be used in the terminal device in the first aspect, or may be an apparatus (for example, a chip, a chip system, or a circuit) in the terminal device or an apparatus that can be used together with the terminal device.

In a possible implementation, the communication apparatus includes a transceiver unit and a processing unit. The processing unit is configured to control the transceiver unit to perform signal receiving and sending. The transceiver unit is configured to send, to a first network device, expected handover information and a measurement result that are determined by the terminal device; and is further configured to receive first information sent by the first network device, where the first information is used by the terminal device to access a second network device.

According to a fourth aspect, a communication apparatus is provided. The apparatus includes a module or a unit configured to perform each step in any one of the second aspect or the possible implementations of the second aspect. The module or the unit may be a hardware circuit, may be software, or may be implemented by the hardware circuit in combination with the software. The communication apparatus may be used in the network device in the second aspect, or may be an apparatus (for example, a chip, a chip system, or a circuit) in the network device or an apparatus that can be used together with the network device.

In a possible implementation, the communication apparatus includes a transceiver unit and a processing unit. The processing unit is configured to control the transceiver unit to perform signal receiving and sending. The transceiver unit is configured to receive a measurement report and expected handover information that is determined by a terminal device that are sent by the terminal device; the processing unit is configured to determine, based on the measurement report and the expected handover information, to enable the terminal device to access a second network device; and the transceiver unit is further configured to send first information to the terminal device, where the first information is used by the terminal device to access the second network device.

According to a fifth aspect, a communication apparatus is provided. The apparatus includes at least one processor, configured to perform the method in any one of the first aspect or the possible implementations of the first aspect.

In a possible implementation, the processor executes instructions stored in a memory, to implement the method in any one of the first aspect or the possible implementations of the first aspect. Optionally, the communication apparatus further includes the memory that stores the instructions. Optionally, the memory and the processor are integrated together or disposed independently.

In a possible implementation, the processor implements the method in any one of the first aspect or the possible implementations of the first aspect by using a logic circuit of the processor.

In a possible implementation, the communication apparatus further includes a transceiver, configured to receive a signal and send a signal.

According to a sixth aspect, a communication apparatus is provided. The apparatus includes at least one processor, configured to perform the method in any one of the second aspect or the possible implementations of the second aspect.

In a possible implementation, the processor executes instructions stored in a memory, to implement the method in any one of the second aspect or the possible implementations of the second aspect. Optionally, the communication apparatus further includes the memory that stores the instructions. Optionally, the memory and the processor are integrated together or disposed independently.

In a possible implementation, the processor implements the method in any one of the second aspect or the possible implementations of the second aspect by using a logic circuit of the processor.

In a possible implementation, the communication apparatus further includes a transceiver, configured to receive a signal and send a signal.

According to a seventh aspect, a communication apparatus is provided. The apparatus includes at least one processor and an interface circuit. The interface circuit is configured to output a signal and/or input a signal. The at least one processor is configured to perform the method in any one of the first aspect or the possible implementations of the first aspect.

According to an eighth aspect, a communication apparatus is provided. The apparatus includes at least one processor and an interface circuit. The interface circuit is configured to output a signal and/or input a signal. The at least one processor is configured to perform the method in any one of the second aspect or the possible implementations of the second aspect.

According to a ninth aspect, a terminal device is provided. The terminal device includes the communication apparatus provided in the third aspect, the terminal device includes the communication apparatus provided in the fifth aspect, or the terminal device includes the communication apparatus provided in the seventh aspect.

According to a tenth aspect, a network device is provided. The network device includes the communication apparatus provided in the fourth aspect, a terminal device includes the communication apparatus provided in the sixth aspect, or a terminal device includes the communication apparatus provided in the eighth aspect.

According to an eleventh aspect, a computer program product is provided. The computer program product includes a computer program. When the computer program is executed by a processor, the computer program is for performing the method in any one of the first aspect or the possible implementations of the first aspect or the method in any one of the second aspect or the possible implementations of the second aspect.

According to a twelfth aspect, a computer-readable storage medium is provided. The computer-readable storage medium stores a computer program. When the computer program is executed, the computer program is for performing the method in any one of the first aspect or the possible implementations of the first aspect or the method in any one of the second aspect or the possible implementations of the second aspect.

According to a thirteenth aspect, a communication system is provided. The communication system includes the foregoing terminal device and the foregoing network device.

According to a fourteenth aspect, a chip is provided. The chip includes a processor, configured to invoke a computer program from a memory and run the computer program, so that a communication device in which the chip is installed performs the method in any one of the first aspect or the possible implementations of the first aspect or the method in any one of the second aspect or the possible implementations of the second aspect.

In the cell handover method and the communication apparatus provided in this application, in the process in which cell handover is performed on the terminal device, the terminal device reports, to the network device, the expected handover information determined by the terminal. When determining whether to perform handover, the network device makes the decision with reference to the expected handover information of the terminal device, so that the handover procedure can be more accurately controlled, to improve the success probability of the handover. For example, the network device can be enabled to more accurately determine the handover time, to more accurately control the sending time point of each piece of signaling in the handover procedure; and the network device can be enabled to select the handover policy that better matches the terminal device, to improve the success probability of the handover and the efficiency of the handover.

### BRIEF DESCRIPTION OF DRAWINGS

FIG. 1 is a schematic flowchart of an example of cell handover in a new radio NR system;
FIG. 2 is a diagram of a scenario of an example of cell handover according to an embodiment of this application;
FIG. 3 is a diagram of a scenario of another example of cell handover according to an embodiment of this application;
FIG. 4 is a diagram of an example of a communication system used in an embodiment of this application according to embodiments of this application;
FIG. 5 is a schematic interaction diagram of a cell handover method according to an embodiment of this application;
FIG. 6 is a schematic interaction diagram of another cell handover method according to an embodiment of this application;
FIG. 7 is a schematic interaction diagram of another cell handover method according to an embodiment of this application;
FIG. 8 is a schematic block diagram of an example of a communication apparatus according to an embodiment of this application;
FIG. 9 is a schematic block diagram of another example of a communication apparatus according to an embodiment of this application;
FIG. 10 is a schematic block diagram of still another example of a communication apparatus according to an embodiment of this application;
FIG. 11 is a schematic block diagram of another example of a communication apparatus according to an embodiment of this application; and
FIG. 12 is a schematic block diagram of a terminal device according to an embodiment of this application.

### DESCRIPTION OF EMBODIMENTS

The following describes technical solutions in this application with reference to accompanying drawings.

In descriptions of embodiments of this application, "/" means "or" unless otherwise specified. For example, A/B may represent A or B. In this specification, "and/or" describes only an association relationship between associated objects, and represents that three relationships may exist. For example, A and/or B may represent the following three cases: Only A exists, both A and B exist, and only B exists. In addition, in the descriptions in embodiments of this application, "a plurality of" means two or more.

Terms "first" and "second" below are merely intended for a purpose of description, and cannot be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

The technical solutions in embodiments of this application may be applied to various communication systems, for example, a long term evolution (Long Term Evolution, LTE) system, an LTE frequency division duplex (Frequency Division Duplex, FDD) system, an LTE time division duplex (Time Division Duplex, TDD) system, a 5th generation (5th Generation, 5G) system, and a communication system evolved after 5G such as a new radio (New Radio, NR) communication system or a 6th generation (6th Generation, 6G) communication system.

A terminal device mentioned in embodiments of this application may be a device with a wireless transceiver function, and may be specifically user equipment (user equipment, UE), an access terminal, a subscriber unit (subscriber unit), a subscriber station, a mobile station (mobile station), a customer-premises equipment (customer-premises equipment, CPE), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to the wireless modem, a vehicle-mounted device, a communication device carried on a high-altitude aircraft, a wearable device, an uncrewed aerial vehicle, a robot, a point of sale (point of sale, POS) terminal, a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In embodiments of this application, an apparatus configured to implement a function of the terminal device may be a terminal device, or may be an apparatus that can support the terminal device in implementing the function, for example, a chip system. The apparatus can be installed in the terminal device, or can match the terminal device for use. In embodiments of this application, the chip system may consist of a chip, or may include the chip and another discrete component.

A network device mentioned in embodiments of this application is a device having a wireless transceiver function, and is configured to communicate with the terminal device; or may be a device that enables the terminal device to access a wireless network. The network device may be a node in a radio access network, and may also be referred to as a base station, or may be referred to as a radio access network (radio access network, RAN) node (or device). The network device may be an evolved NodeB (evolved NodeB, eNB or eNodeB) in LTE, a next generation NodeB (next generation NodeB, gNB) in a 5G network, a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like.

Optionally, network devices in embodiments of this application may further include various forms of base stations, for example, a macro base station, a micro base station (which is also referred to as a small cell), a relay station, a device that implements a function of the base station in a communication system evolved after 5G, a transmitting and receiving point (transmitting and receiving point, TRP), a transmitting point (transmitting point, TP), and devices that function as base stations in a mobile switching center, device-to-device (Device-to-Device, D2D), vehicle-to-everything (vehicle-to-everything, V2X), and machine-to-machine (machine-to-machine, M2M) communication, and may further include a central unit (central unit, CU) and a distributed unit (distributed unit, DU) in a cloud radio access network (cloud radio access network, C-RAN) system, and a network device in a non-terrestrial network (non-terrestrial network, NTN) communication system, that is, may be deployed on a high-altitude platform or a satellite. This is not specifically limited in embodiments of this application.

In embodiments of this application, the network device may communicate and interact with a core network device, to provide a communication service for the terminal device. The core network device is, for example, a device in a core network (core network, CN) of the 5G network. As a bearer network, the core network provides an interface to a data network, provides communication connection, authentication, management, and policy control for the terminal, bearers a data service, and so on.

A specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program and that is in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key controller). In addition, various storage media described in this specification may indicate one or more devices and/or other machine-readable media that are configured to store information. The term "machine-readable media" may include but is not limited to a radio channel and various other media that can store, include, and/or carry instructions and/or data.

In decades, a wireless communication system has undergone evolution and research from a first-generation analog communication system to a 5G NR communication system and a future 6G communication system. In this complex evolution process, a high throughput and massive connectivity have always been core challenges for a wireless communication network. To cope with the foregoing challenges, the 5G communication system proposes applications such as ultra-reliable low-latency communication (ultra-reliable low-latency communication, URLLC), enhanced mobile broadband (enhanced mobile broadband, eMBB), and massive machine-type communications (massive machine-type communications, mMTC) as technical objectives. The 6G wireless communication system is bound to evolve toward a higher throughput, a lower latency, higher reliability, more connections, a higher spectrum utilization rate, and the like.

With continuous development of technologies related to three control forces, namely, computing power, an algorithm, and data, of artificial intelligence (artificial intelligence, AI), AI technologies have set off a new round of technological revolution in human society. Research on existing technologies shows that AI has great application potential in many aspects such as modeling and learning in a complex unknown environment, channel prediction, intelligent signal generation and processing, network status tracking and intelligent scheduling, and network optimization and deployment, is expected to promote evolution of a communication paradigm and transformation of a network architecture, and is of great significance and value to research on a 6G technology.

In addition, fusion of a communication network, a sensing network, and a computing power network also becomes one of leading trends in the 6G technology and services. In a narrow sense, the sensing network may refer to a system that has capabilities such as target positioning (ranging, speed measurement, and angle measurement), target imaging, target detection, and target recognition. In a broad sense, the sensing network refers to a system that senses attributes and statuses of all services, networks, users, terminals, and environmental objects.

Because a location of a user often changes, after the location of the user changes, a terminal device used by the user may enter, from a cell range covered by a network device (for example, a base station), a cell range covered by another network device. In this case, cell handover needs to be performed on the terminal device. That is, the terminal device is handed over from a base station that currently serves the terminal device to another base station.

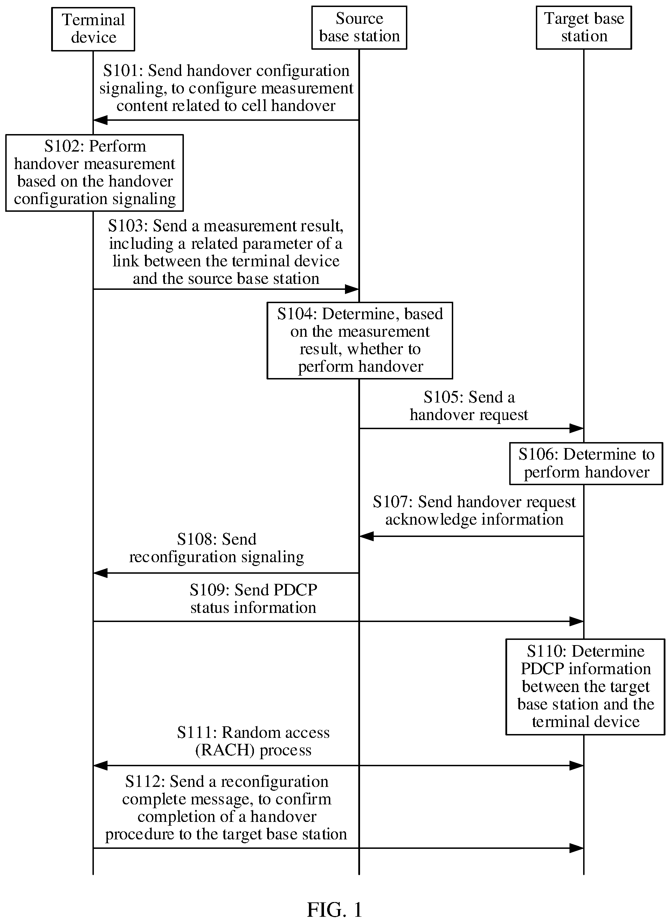

FIG. 1 is a schematic flowchart of cell handover in an NR system. As shown in FIG. 1, a procedure mainly includes S101 to S112.

S101: A source base station (source BS) whose coverage currently includes a terminal device sends handover configuration signaling to the terminal device. Accordingly, the terminal device receives the handover configuration signaling. The handover configuration signaling is for configuring measurement content related to cell handover (handover, HO) for the terminal device. For example, the measurement content includes a measurement procedure and a measurement configuration on a terminal device side.

In a possible implementation, the handover configuration signaling may be radio resource control (radio resource control, RRC) signaling.

In a possible implementation, the measurement configuration may include a frequency of a synchronization signal block, a subcarrier spacing of the synchronization signal block, timing of measurement, a resource configuration of a reference signal, a threshold of a measurement result, a threshold of a reference signal received power (reference signal received power, RSRP), a threshold of reference signal received quality (reference signal received quality, RSRQ), a threshold of a signal to interference plus noise ratio (signal to Interference plus noise ratio, SINR), an ID of a measured cell (cell), a measurement periodicity, a measurement bandwidth, a quasi co-location (Quasi Co-Location, QCL) relationship between reference signals, and the like. In this embodiment of this application, the source base station may be understood as a base station that currently serves the terminal device.

S102: The terminal device performs handover measurement based on the handover configuration signaling.

S103: The terminal device sends a measurement result to the source base station. Accordingly, the source base station receives the measurement result.

In a possible implementation, the terminal device may send the measurement result to the source base station via a measurement report (Measurement Report).

In a possible implementation, the measurement result includes a related parameter of a link between the terminal device and the source base station, for example, may include channel quality of the link, RSRPs, RSRQ, SINRs, and received signal strength indications (received signal strength indications, RSSIs) that are measured based on different reference signals (for example, a channel state information reference signal (channel state information reference signal, CSI-RS), a sounding reference signal (sounding reference signal, SRS), and a synchronization signal block (Synchronization Signal Block, SSB)), and whether a trigger condition corresponding to a handover procedure is satisfied.

S104: The source base station determines, based on the measurement result, whether to perform handover.

S105: When the source base station determines that the handover needs to be performed, the source base station sends a handover request (HO request) to a target (Target) base station. Accordingly, the target base station receives the handover request. The handover request may include an identifier (identifier, ID) of the target base station, a cell radio network temporary identifier (cell radio network temporary identifier, Cell-RNTI) of the terminal device in the source base station, an inactive time of the terminal device, antenna information of the terminal device, a downlink carrier frequency of the terminal device, quality of service (Quality of Service, QoS) information, synchronization information, channel information of the terminal device, and the like. In this embodiment of this application, the target base station may be understood as a base station to which the terminal device needs to be handed over from the source base station.

S106: The target base station determines, based on the handover request, whether to perform handover.

S107: When the target base station determines that the handover needs to be performed, the target base station performs handover between a physical layer and a media access control (media access control, MAC) layer, and sends handover request acknowledge (handover request acknowledge, HO request ACK) information to the source base station. Accordingly, the source base station receives the handover request acknowledge information.

S108: After receiving the handover request acknowledge information, the source base station triggers handover of the link between the terminal device and the source base station, and sends reconfiguration signaling to the terminal device. Accordingly, the terminal device receives the reconfiguration signaling.

In a possible implementation, the reconfiguration signaling is an RRC reconfiguration (RRC Reconfiguration) message.

In a possible implementation, the reconfiguration signaling may include the ID of the target base station, a cell-RNTI of the terminal device in the target base station, a security algorithm of the target base station, a random access channel (random access channel, RACH) resource of the target base station, synchronization information of the target base station, reference signal configuration information of the target base station, and the like.

S109: The terminal device sends packet data convergence protocol (packet data convergence protocol, PDCP) status information to the target base station. Accordingly, the target base station receives the PDCP status information.

S110: The target base station determines PDCP information between the target base station and the terminal device based on the PDCP status information.

S111: A random access (RACH) procedure is performed between the terminal device and the target base station. In this procedure, the target base station sends timing advance (timing advance, TA) information to the terminal device. Accordingly, the terminal device receives the timing advance information.

S112: The terminal device synchronizes with the target base station, and sends a reconfiguration complete message to the target base station, to confirm completion of the handover procedure to the target base station. Accordingly, the target base station receives the reconfiguration complete message.

In a possible implementation, the reconfiguration complete message may be an RRC reconfiguration complete (RRC Reconfiguration Complete) message.

After S112 is completed, the terminal device is handed over to a cell covered by the target base station, and communicates data and control signaling with the target base station.

Based on a status of link interruption (a data transmission link is interrupted, and a control signaling transmission link is not interrupted) between the terminal device and the source base station, the foregoing handover procedure may have the following three policies:

A first policy is a conventional handover policy. From reporting of the measurement result by the terminal device in step S103 to completion of the handover procedure in S112, the terminal device interrupts the data transmission link between the terminal device and the source base station, where interruption duration is approximately 30 ms to 60 ms.

A second policy is conditional handover (Conditional Handover, CHO). After receiving a CHO configuration (for example, the handover configuration signaling in S101 includes the CHO configuration), the terminal device continuously evaluates a handover execution condition until the handover is completed. That is, in step S108, after receiving the RRC reconfiguration message from the source base station, the terminal device further evaluates the execution condition again. Because the handover execution condition is continuously evaluated, the conditional handover has higher reliability than the conventional handover policy, where an interruption time period (namely, duration in which the terminal device interrupts the data transmission link between the terminal device and the source base station) during the handover is from S108 to completion of the handover procedure in S112.

A third policy is dual active protocol stack (dual active protocol stack, DAPS) handover. Before the procedure of the handover between the target base station and the source base station is completed, a terminal device maintains a link connection to the source base station. That is, the terminal device continues to receive downlink data of the source base station until the source base station is released, and continues to perform uplink data transmission with the source base station until the random access procedure between the terminal device and the target base station is successfully completed. In this policy, there is no interruption time period (namely, duration in which the terminal device interrupts the data transmission link between the terminal device and the source base station) during the handover.

In addition, in the handover procedure shown in FIG. 1, the entire handover procedure is mainly controlled by a base station. After receiving the measurement report from the terminal device, the source base station determines whether to send the handover request to the target base station, and determines, based on a feedback from the target base station, whether to send the RRC reconfiguration message to the terminal device. In this process, the source base station determines, based only on a status of the link between the terminal device and the source base station, whether the handover needs to be performed, a time of reporting the measurement result, a time of performing RACH, a handover latency, and the like. However, in a process of determining whether the handover needs to be performed, the time of reporting the measurement result, the time of performing RACH, the handover latency, and the like, the source base station refers to only information on a source base station side, and does not consider handover-related assistance information specific to the terminal device side. Consequently, the source base station inaccurately determines the handover procedure (for example, the time of reporting the measurement result, the time of performing RACH, and the handover latency that are determined do not match an actual situation of the terminal device). Consequently, the cell handover may fail.

However, when AI, a sensing fusion technology, and the like are introduced into 6G communication, the terminal device may generate, via an AI model and/or a sensing procedure on the terminal device side, the handover-related assistance information specific to the terminal device side, for example, including a data rate, a handover time, a handover location, and a handover latency that are expected by the terminal device in the handover procedure, the handover time expected by the terminal device, and a power and energy consumption of the terminal device. The foregoing information has key impact on the handover procedure.

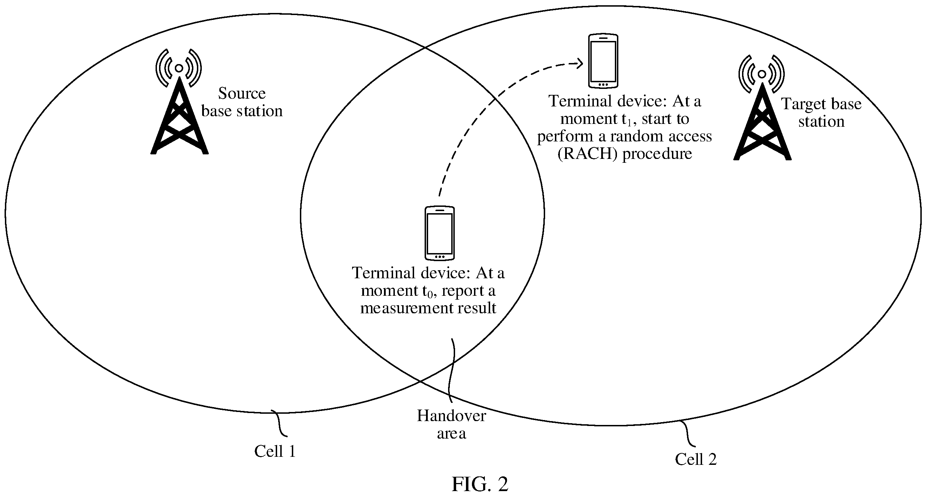

For example, as shown in FIG. 2, a cell corresponding to the source base station is a cell 1, the cell corresponding to the target base station is a cell 2, and there is an overlapping area (which may also be referred to as a handover area) between the cell 1 and the cell 2. When a movement speed of the terminal device is greater than or equal to a preset value, according to the handover procedure in FIG. 1 and based on a handover configuration of the source base station, the terminal device reports the measurement result at a moment t0, and the random access (RACH) procedure starts to be performed between the terminal device and the target base station at a moment t1. However, at the moment t1, the terminal device may have moved out of the handover area and entered the cell 2 corresponding to the target base station. In an ideal case, in the time period in which the terminal performs the RACH procedure, a location of the terminal device should be in the handover area, and a time point at which the terminal device moves out of the handover area and enters the cell 2 corresponding to the target base station should be after the terminal device ends the RACH procedure. However, in a case shown in FIG. 2, although the terminal device has moved out of the handover area and entered the cell 2 corresponding to the target base station, because the handover is not completed (the RACH procedure is not ended), that is, the handover is performed excessively late, the terminal device cannot communicate data with the target base station. Consequently, a waste of a communication resource is caused.

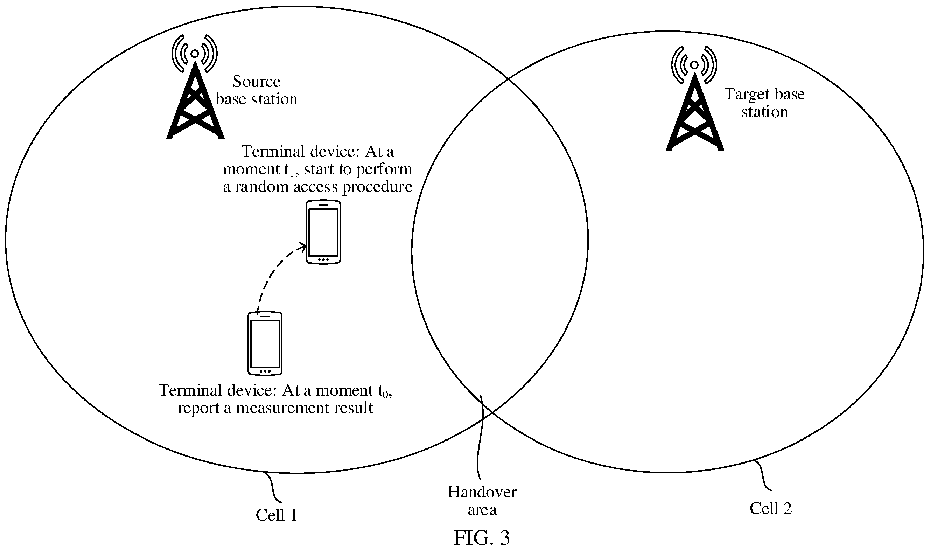

For another example, as shown in FIG. 3, a cell corresponding to the source base station is a cell 1, the cell corresponding to the target base station is a cell 2, and there is an overlapping area (which may also be referred to as a handover area) between the cell 1 and the cell 2. When a movement speed of the terminal device is less than a preset value, according to the handover procedure in FIG. 1 and based on a handover configuration of the source base station, the terminal device reports the measurement result at a moment t0, and the random access (RACH) procedure is performed between the terminal device and the target base station at a moment t1. However, at the moment t1, the terminal device may move only a quite short distance relative to the moment t0, and has not moved to the handover area. In an ideal case, when the cell handover procedure is performed on the terminal, the terminal device should be located in the handover area. However, in a case shown in FIG. 3, cell handover starts, before the terminal device moves to the handover area, to be performed on the terminal device. Because a location of the terminal device is still in a coverage area (in the cell 1) of the source base station, the handover does not need to be performed on the terminal device, and the source base station continues to serve the terminal device. However, the handover procedure needs signaling overheads, resulting in a waste of a resource. In addition, because the terminal device is not in the handover area, that is, is not in coverage of the target base station, the RACH procedure cannot be completed, and consequently the handover fails.

It can be learned that in a process in which the cell handover is performed on the terminal device, the information specific to the terminal device side has important impact on a success probability and efficiency of the handover.

In view of this, this application provides a cell handover method. In a process in which cell handover is performed on a terminal device, the terminal device reports, to a network device, information specific to a terminal device side. When determining whether to perform handover, the network device makes a decision with reference to the information specific to the terminal device side, and controls a cell handover procedure. In this way, a success probability and efficiency of the cell handover can be improved.

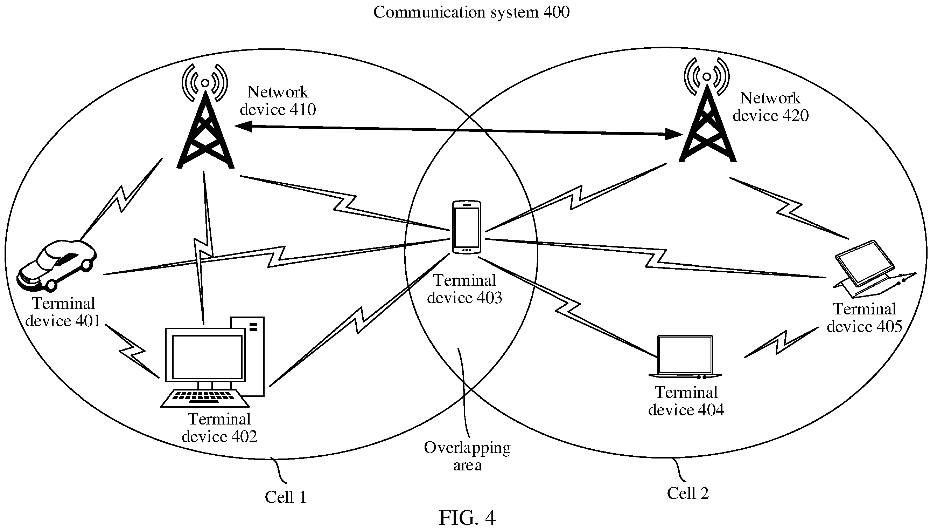

For ease of understanding of embodiments of this application, a communication system used in an embodiment of this application is first briefly described with reference to FIG. 4.

FIG. 4 is a diagram of a communication system 400 used in a resource requesting method according to an embodiment of this application. As shown in FIG. 4, the communication system 400 includes a network device 410, a network device 420, and terminal devices 401 to 405. Data transmission may be performed between terminal devices in a device-to-device (device-to-device, D2D) communication manner. A link between the terminal devices may be referred to as a sidelink. The network device 410 and the network device 420 may communicate with each other through a backhaul (backhaul) link. The backhaul link may be a wired backhaul link (for example, an optical fiber or a copper cable), or may be a wireless backhaul link (for example, a microwave). A terminal device may communicate, through a radio link, with a network device that serves the terminal device. Each network device corresponds to one or more service coverage areas (which may also be referred to as cellulars or cells). A terminal device that enters the service coverage area may communicate with the network device via a wireless signal, to accept a radio access service provided by the network device. In an example shown in FIG. 4, an area covered by the network device 410 may be referred to as a cell 1, an area covered by the network device 420 may be referred to as a cell 2, the terminal devices 401 to 403 in the cell 1 are served by the network device 410, and the terminal devices 403 to 405 in the cell 2 are served by the network device 420. There is an overlapping area (which may also be referred to as a handover area) between the cell 1 and the cell 2. The terminal device 403 in the overlapping area may receive wireless signals from a plurality of network devices (the network device 410 and the network device 420). Therefore, the plurality of network devices may simultaneously serve the terminal device.

In a scenario shown in FIG. 4, when cell handover is performed on the terminal device 403 located in the overlapping area, for example, in a process of being handed over from the cell 1 corresponding to the network device 410 (a source network device) to the cell 2 corresponding to the network device 420 (a target network device), or in a process of being handed over from the cell 2 corresponding to the network device 420 (a source network device) to the cell 1 corresponding to the network device 410 (a target network device), cell handover may be performed by using the cell handover method in embodiments of this application. Certainly, as another terminal device moves, when the another terminal device moves to the overlapping area, and cell handover needs to be performed on the another terminal device, the cell handover may also be performed by using the cell handover method in embodiments of this application.

It should be understood that the communication system shown in FIG. 4 may further include more network nodes, for example, terminal devices or network devices. The network devices or the terminal devices included in the communication system shown in FIG. 4 may be network devices or terminal devices in the foregoing various forms. These are not shown one by one in the figure in this embodiment of this application.

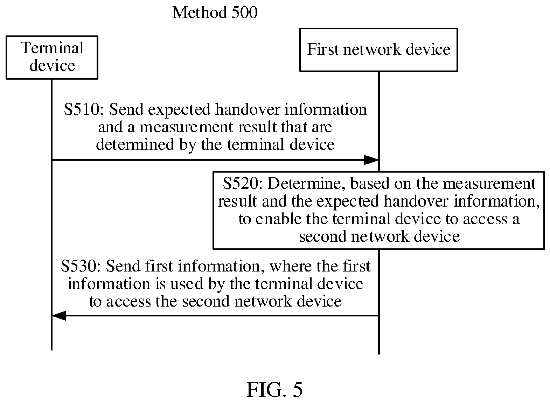

With reference to FIG. 5, the following describes in detail a cell handover method provided this application. FIG. 5 is a schematic interaction diagram of a cell handover method 500 according to this application. The method 500 may be applied to the scenario shown in FIG. 4, or certainly may be applied to another communication scenario. This is not limited in this embodiment of this application.

It should be further understood that, in this embodiment of this application, the method is described by using an example in which the method is performed by a terminal device and a network device. By way of example but not limitation, the method may alternatively be performed by chips, chip systems, or processors used in a terminal device and a network device.

As shown in FIG. 5, the method 500 shown in FIG. 5 may include S510 to S530. The following describes in detail the steps in the method 500 with reference to FIG. 5.

S510: The terminal device sends, to a first network device, expected handover information and a measurement result that are determined by the terminal device. Accordingly, the first network device receives the expected handover information and the measurement result.

In some implementations, the first network device may be a network device that currently serves the terminal device or whose coverage includes the terminal device. Optionally, the first network device may also be referred to as a source network device.

In some implementations, the measurement result may include a related parameter of a link between the terminal device and the first network device, for example, may include channel quality of the link, RSRPs, RSRQ, SINRs, and RSSIs that are measured based on different reference signals (for example, a CSI-RS, an SRS, and an SSB), and whether a trigger condition corresponding to a handover procedure is satisfied.

In this embodiment of this application, "expected" may be understood as that the terminal device expects, in a cell handover process, that cell handover is performed by using content or a value of a parameter included in the expected handover information. The expected handover information may also be referred to as handover-related assistance information specific to a terminal device side. However, in the cell handover process, whether the handover is performed by actually using the content of the foregoing information or the value of the parameter is finally determined by the first network device. If the first network device determines to use the expected handover information sent by the terminal device, a final handover parameter (for example, a time of reporting the measurement result, a time of performing RACH, and a handover latency) is consistent with the expected handover information.

In some implementations, the expected handover information may include content of at least one of the following information or a value of at least one of the following parameters: an expected handover time, an expected handover location, an expected handover policy, an expected handover latency, and an expected rate of data transmission during the handover that are determined by the terminal device. Each of the expected handover time, the expected handover location, the expected handover policy, the expected handover latency, and the expected rate of the data transmission during the handover may be understood as one type of information or parameter.

In some other implementations, the expected handover information may further include content of at least one of the following information or a value of at least one of the following parameters: movement information predicted by the terminal device, a power of the terminal device, and a state of energy of the terminal device. Each of the movement information predicted by the terminal device, the power of the terminal device, and the state of energy of the terminal device may be understood as one type of information or parameter.

In some other implementations, the expected handover information may further include content of at least one of the following information or a value of at least one of the following parameters: handover reliability, a probability of an expected handover time, a probability of an expected handover location, a probability of an expected handover policy, a probability of an expected handover latency, a probability of an expected rate of data transmission during the handover, and the like. Each of the handover reliability, the probability of the expected handover time, the probability of the expected handover location, the probability of the expected handover policy, the probability of the expected handover latency, and the probability of the expected rate of the data transmission during the handover may be understood as one type of information or parameter.

In some implementations, the terminal device may determine the expected handover information.

In some implementations, the terminal device may send the measurement result and the expected handover information to the first network device via a measurement report (Measurement Report). Alternatively, the terminal device may separately send the measurement result and the expected handover information to the first network device via different signaling. This is not limited in this embodiment of this application.

S520: The first network device determines, based on the measurement result and the expected handover information, to enable the terminal device to access a second network device.

It may be understood that, in this embodiment of this application, the terminal device needs to be handed over from a cell covered by the first network device to a cell covered by the second network device. Optionally, the second network device may also be referred to as a target network device.

In some implementations, the first network device may determine a channel state based on a channel quality parameter, the RSRPs, the RSRQ, the SINRs, the RSSIs, and the like in the measurement result. When the channel state satisfies a specific condition or threshold, the first network device may determine to enable the terminal device to access the second network device.

In this embodiment of this application, when determining whether to perform handover, the first network device may further refer to the expected handover information, to determine whether the terminal device needs to be handed over to the cell covered by the second network device.

For example, the first network device may determine, based on one or more of the movement information predicted by the terminal device, the power of the terminal device, the handover reliability, the expected handover time, the expected handover latency, a value of the state of energy of the terminal device, the handover latency, a handover time, and the like, whether to perform handover. In addition, when it is determined to hand over the terminal device to the cell covered by the second network device, the handover procedure can be further more accurately controlled with reference to the expected handover information, so that a success probability of the handover is improved. For example, the first network device may determine the handover time based on the value of the state of energy of the terminal device, may determine the handover latency based on the probability of the expected handover latency, may determine a modulation order and a code rate of the data transmission based on the expected rate that is of the data transmission during the handover and that is sent by the terminal device, may determine a sending moment of related signaling in the handover procedure based on the movement information (for example, a future movement direction or a future location) predicted by the terminal device, may determine an actual rate of the data transmission during the handover based on the probability of the expected rate of the data transmission during the handover, may determine a finally actually used handover policy based on the expected handover policy sent by the terminal device, and may determine the handover latency based on the probability of the expected handover latency. In this way, the first network device can be enabled to more accurately determine values of parameters used in the handover process and accurately control a sending time point of each piece of signaling in the handover procedure, so that the parameters match a capability, a location, and the like of the terminal device, to improve the success probability of the cell handover.

S530: The first network device sends first information to the terminal device, where the first information is used by the terminal device to access the second network device. Accordingly, the terminal device receives the first information.

In some implementations, when the first network device determines, based on the measurement result and the expected handover information, to hand over the terminal device to the cell covered by the second network device, the first network device may send the first information to the terminal device.

In some implementations, the first information may be an RRC reconfiguration message.

In some implementations, the first information may include an ID of the second network device, a cell-RNTI of the terminal device in the second network device, a security algorithm of the second network device, RACH resource information of the second network device, synchronization information of the second network device, reference signal configuration information of the second network device, and the like.

After receiving the first information, the terminal device may access the second network device based on the first information, that is, be handed over to the cell covered by the second network device, and communicate control signaling and data with the second network device.

According to the cell handover method provided in this application, in the process in which the cell handover is performed on the terminal device, the terminal device reports, to the network device, the expected handover information determined by the terminal. When determining whether to perform handover, the network device makes a decision with reference to the expected handover information of the terminal device, so that the handover procedure can be more accurately controlled, to improve the success probability of the handover. For example, the network device can be enabled to more accurately determine the handover time, to more accurately control the sending time point of each piece of signaling in the handover procedure; and the network device can be enabled to select a handover policy that better matches the terminal device, to improve the success probability of the handover and efficiency of the handover.

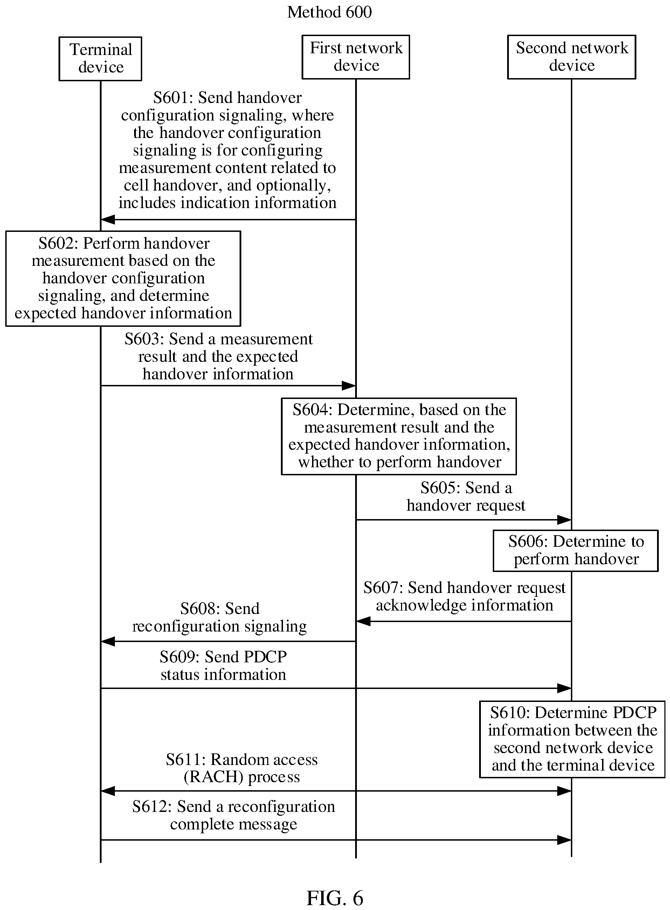

FIG. 6 is a schematic interaction diagram of a cell handover method 600 according to an embodiment of this application. The method 600 may be applied to the scenario shown in FIG. 4, or certainly may be applied to another communication scenario. This is not limited in this embodiment of this application.

As shown in FIG. 6, the method 600 shown in FIG. 6 may include S601 to S612. The following describes in detail the steps in the method 600 with reference to FIG. 6.

S601: A first network device (which may also be referred to as a source network device) whose coverage currently includes a terminal device sends handover configuration signaling to the terminal device, where the handover configuration signaling is for configuring measurement content related to cell handover. Accordingly, the terminal device receives the handover configuration signaling.

For example, the measurement content includes a measurement procedure and a measurement configuration on a terminal device side. In this embodiment of this application, the source network device may be understood as a network device that currently serves the terminal device.

In a possible implementation, the handover configuration signaling may be RRC signaling.

In a possible implementation, the handover configuration signaling may further include indication information, and the indication information indicates the terminal device to report expected handover information (that is, send the expected handover information to the first network device). In this implementation, the terminal device can be enabled to determine that the expected handover information needs to be reported, to ensure that the terminal device reports the expected handover information, so that it is ensured that the network device may make a decision with reference to the expected handover information when the network device determines whether to perform handover, thereby improving a success probability of the cell handover.

S602: The terminal device performs handover measurement based on the handover configuration signaling, and determines the expected handover information.

In this embodiment of this application, in a process of performing handover measurement, in addition to measuring a related parameter of a link between the terminal device and the first network device based on the handover configuration signaling, the terminal device may further determine the expected handover information (which may also be referred to as handover-related assistance information or information specific to the terminal device side). The expected handover information is determined by the terminal device through measurement or prediction, and is used by the first network device to make the handover decision.

In some implementations, the terminal device may determine that the expected handover information needs to be reported. In this case, the handover configuration signaling in S601 may not include the indication information.

In some other implementations, a message "the terminal device needs to report the expected handover information" may be predefined or configured by using signaling. "Predefined" may be understood as being predefined in a protocol, and "configured by using signaling" may be understood as being configured by using higher layer signaling or physical layer signaling. The higher layer signaling may include, for example, RRC signaling, MAC control element (control element, CE) signaling, and radio link control (radio link control, RLC) signaling. The physical layer signaling may include, for example, downlink control information (downlink control information, DCI) and signaling that is communicated through a downlink physical layer channel. A physical downlink channel may be, for example, a physical downlink control channel (physical downlink control channel, PDCCH) or a physical downlink shared channel (physical downlink shared channel, PDSCH). In this case, the handover configuration signaling in S601 may alternatively not include the indication information.

In some other implementations, the terminal device may determine, based on the indication information included in the handover configuration signaling in S601, that the expected handover information needs to be reported.

In some other implementations, the first network device may alternatively separately send indication information to the terminal device, where the indication information indicates the terminal device to report the expected handover information. In this case, the handover configuration signaling in S601 may alternatively not include the indication information. That is, the handover configuration signaling in S601 and the indication information may be separately sent by using separate signaling.

In some implementations of this application, the expected handover information may include content of at least one of the following information or a value of at least one of the following parameters: an expected handover time, an expected handover location, an expected handover policy, an expected handover latency, and an expected rate of data transmission during the handover that are determined by the terminal device. Each of the expected handover time, the expected handover location, the expected handover policy, the expected handover latency, and the expected rate of the data transmission during the handover may be understood as one type of information or parameter. In S602, the terminal device may determine the content of the information or the value of the parameter.

For example, the expected handover policy may be any one or more of conventional handover, conditional handover, dual active protocol stack handover, and the like. Content or a value of the expected handover policy may be a handover policy or handover policies expected by the terminal device.

The expected handover time may be understood as that the terminal device expects that related steps in a handover procedure start, at one or more time points, to be performed. For example, the expected handover time may be a time point at which the first network device sends a handover request to a second network device, for example, a time point at which the first network device performs S605 in the method 600. For another example, the expected handover time may alternatively be a time point at which the terminal device expects to receive reconfiguration signaling, for example, a time point at which the first network device performs S608 in the method 600. For still another example, the expected handover time may alternatively be one or more time points at which the terminal device expects that the handover procedure is completed, for example, a time point at which the terminal device performs S612 in the method 600.

In a possible implementation, the expected handover time may be an absolute time point. Optionally, the expected handover time may be coordinated universal time (coordinated universal time, UTC). Optionally, the expected handover time may be represented from a perspective of a time domain resource. Specifically, the expected handover time may be represented in a time unit of a slot (slot), a symbol (symbol), or a mini-slot (mini-slot). For example, the expected handover time is indicated by a slot index.

In another possible implementation, the expected handover time may alternatively be a relative offset time point relative to a start time point. For example, if the expected handover time is a yy^{th} milliseconds of an X^{th} second, the expected handover time may be understood as an offset of X seconds and yy milliseconds calculated by using a start time point as a moment zero, where the start time point may be an absolute time point. For another example, the expected handover time may be an offset of N slots calculated by using a slot number as a start point. In some implementations, the start time point may be predefined or configured by using signaling.

In other words, in this embodiment of this application, there may be one or more values of the expected handover time. The expected handover time may be start time points of the foregoing steps (S605, S608, and S612), or may be end time points of the foregoing steps.

The expected handover location may be understood as that the terminal device expects that the related steps in the handover procedure start, at one or more locations, to be performed. A value of the expected handover location may be longitude and latitude, a coordinate, or the like of the expected handover location.

The expected handover latency may be understood as a latency expected by the terminal device in the handover procedure. There may be one or more values of the expected handover latency. That is, there may be one or more values of the expected handover latency.

For example, the expected handover latency may be a latency between the time point at which the first network device sends the handover request to the second network device and the time point at which the terminal device expects to receive the reconfiguration signaling, for example, a latency between the time point at which the first network device performs S605 in the method 600 and the time point at which the first network device performs S608 in the method 600.

For another example, the expected handover latency may be a latency between the time point at which the first network device sends the handover request to the second network device and the one or more time points at which the terminal device expects that the handover procedure is completed, for example, a latency between the time point at which the first network device performs S605 in the method 600 and the time point at which the terminal device performs S612 in the method 600.

For still another example, the expected handover latency may be a latency between the time point at which the terminal device expects to receive the reconfiguration signaling and the one or more time points at which the terminal device expects that the handover procedure is completed, for example, a latency between the time point at which the first network device performs S608 in the method 600 and the time point at which the terminal device performs S612 in the method 600.

It should be understood that, in this embodiment of this application, the expected handover latency may be a latency between any two steps in S603 to S612. This is not limited in this embodiment of this application.

The expected rate of the data transmission during the handover may be understood as an expected rate of data transmission between the terminal device and the first network device in the cell handover procedure. There may be one or more values of the expected rate of the data transmission during the handover. That is, there may be one or more values of the expected rate of the data transmission during the handover.

It may be understood that, in this embodiment of this application, the expected handover information may further include another parameter or other information that is related to the cell handover and that is determined by the terminal device, and the parameter or the information is a parameter or information specific to the terminal device side.

For example, the expected handover information may further include content of at least one of the following information or a value of at least one of the following parameters:
handover reliability, a probability of the expected handover time, a probability of the expected handover location, a probability of the expected handover policy, a probability of the expected handover latency, a probability of the expected rate of the data transmission during the handover, and the like, where each of the handover reliability, the probability of the expected handover time, the probability of the expected handover location, the probability of the expected handover policy, the probability of the expected handover latency, and the probability of the expected rate of the data transmission during the handover may be understood as one type of information or parameter; and in S602, the terminal device may determine the content of the information or the value of the parameter.

The handover reliability may be understood as a probability that the terminal device is successfully handed over to the second network device. For example, the handover reliability may be 99% or 90%, and a larger probability value indicates higher handover reliability.

The probability of the expected handover time may be understood as a probability of the one or more handover times expected by the terminal device. For example, the expected handover time includes yy^{th} milliseconds of the X^{th} second and kk^{th} milliseconds of a Z^{th} second, and values of probabilities of the expected handover time may be as follows: A probability that the handover is performed at the expected at the yy^{th} milliseconds of the X^{th} second is 0.6, and a probability that the handover is performed at the expected at the kk^{th} milliseconds of the Z^{th} second is 0.4, indicating that the terminal device more expects that the handover is performed at the yy^{th} milliseconds of the X^{th} second. Optionally, a unit of the expected handover time may alternatively be a system frame number, a subframe number, a mini (mini)-subframe number, or the like.

The probability of the expected handover policy may be understood as a probability of one or more handover policies expected by the terminal device. For example, the handover policies expected by the terminal device include the conditional handover and the dual active protocol stack handover. A value of a probability of the conditional handover may be 0.7, and a probability of the dual active protocol stack handover may be 0.3, indicating that a handover policy that the terminal device more expects is the conditional handover.

The probability of the expected handover latency may be understood as a probability of one or more handover latencies expected by the terminal device. For example, if the handover latencies expected by the terminal device include 30 ms and 20 ms, values of probabilities of the handover latencies expected by the terminal device may be as follows: A probability that the expected handover latency is 30 ms is 0.4, and a probability that the expected handover latency is 20 ms is 0.6, indicating that a handover latency that the terminal device more expects is 20 ms. A unit of the expected handover latency may alternatively be duration of a system frame, duration of a subframe, duration of a mini-subframe, or the like.

The probability of the expected handover location may be understood as a probability that the handover is performed at the one or more locations expected by the terminal device. For example, if the handover locations expected by the terminal device include a location A and a location B, values of probabilities of the handover locations expected by the terminal device may be as follows: A probability that the expected handover latency is the location A is 0.6, and a probability that the expected handover location is the location B is 0.4, indicating that the terminal device more expects the location A.

The probability of the expected rate of the data transmission during the handover may be understood as a probability of a data transmission rate expected by the terminal device during the cell handover. For example, expected rates of the data transmission during the handover include 100 Kbps and 200 Kbps, values of probabilities of the expected rates of the data transmission during the handover may be as follows: A probability that the expected rate is 100 Kbps is 0.3, and a probability that the expected rate is 200 Kbps is 0.5, indicating that a data transmission rate that the terminal device more expects is 200 Kbps.

Optionally, in some implementations, the expected handover information may further include content of at least one of the following information or a value of at least one of the following parameters:
movement information predicted by the terminal device, a power of the terminal device, and a state of energy of the terminal device, where each of the movement information predicted by the terminal device, the power of the terminal device, and the state of energy of the terminal device may be understood as one piece of information or parameter; and in S602, the terminal device determines the content of the information or the value of the parameter.

The movement information predicted by the terminal device may be understood as a future movement direction, a future location, or the like of the terminal device, and is predicted by the terminal device. A value of the movement information predicted by the terminal device may be a longitude and latitude set, a coordinate set, or the like of the predicted movement information.

The power of the terminal device may be a specific value or a value range of the power of the terminal device. For example, the value of the power of the terminal device is a range of a maximum power that can be supported by the terminal device.

A value of the state of energy of the terminal device may be a specific value or a value range of energy of the terminal device, for example, a value of current energy of the terminal device (for example, a current battery level of the terminal device).

In some implementations of this application, the terminal device may determine (or obtain), by using an AI model and/or a sensing model, the value of the at least one parameter included in the expected handover information. The expected handover information is obtained by using the AI model and/or the sensing model, so that accuracy of the obtained expected handover information can be improved, and complexity of obtaining the expected handover information can be reduced.

It may be understood that, in this embodiment of this application, the terminal device may further determine, in another manner in addition to by using the AI model and/or the sensing model, the content of the information or the value of the parameter included in the expected handover information. For example, the terminal device may perform measurement, to obtain the value of the at least one parameter included in the expected handover information. A specific process in which the terminal device obtains the content of the information or the value of the parameter included in the expected handover information is not limited in this embodiment of this application.

In a possible implementation, the indication information (the indication information included in the handover configuration signaling in S601 or the indication information separately sent by the first network device to the terminal device) may indicate the terminal device to report the expected handover information (that is, the terminal device to send the expected handover information to the first network device). In this case, the information or the parameters included in the expected handover information may be predefined, configured by using signaling, or determined by the terminal device. The terminal device determines, based on the indication information, that the expected handover information needs to be reported to the first network device, and then determines content of the information or values of the parameters based on the predefined information or parameters, the information or the parameters configured by using the signaling, or the information or the parameters determined by the terminal device. In other words, the indication information may only indicate the terminal device to report the expected handover information, but does not indicate information or parameters specifically included in the expected handover information. In this manner, it can be ensured that the terminal device reports the expected handover information, and the first network device can determine, based on the expected handover information, whether to perform handover and a time point of sending a parameter or signaling used in a handover process, to more accurately control the handover procedure, thereby improving the success probability of the handover.

In another possible implementation, the indication information (the indication information included in the handover configuration signaling in S601 or the indication information separately sent by the first network device to the terminal device) may indicate information or a parameter specifically included in the expected handover information to be reported by the terminal device. In this case, the terminal device determines, based on the indication information, information or parameters specifically included in the expected handover information, and further determines content of the information or values of the parameters. In other words, the indication information may indicate the terminal device to report the expected handover information, and indicate the information or the parameters included in the expected handover information. For example, the indication information may indicate the terminal device to report at least one of parameters such as the expected handover time, the expected handover location, the expected handover policy, the expected handover latency, and the expected rate of the data transmission during the handover. The terminal device may determine, based on the indication information, that values of the parameters such as the expected handover time, the expected handover location, the expected handover policy, the expected handover latency, and the expected rate of the data transmission during the handover need to be determined, and report the values to the first network device. In this manner, the expected handover information reported by the terminal device is expected handover information needed by the network device, so that the accuracy of the expected handover information reported by the terminal device can be improved, and more accurate control of the network device on the handover procedure can be further implemented, to further improve the success probability of the handover.

Optionally, in another possible implementation, behavior "the terminal device needs to report the expected handover information" may be predefined or configured by using signaling. In this case, "the information or the parameters included in the expected handover information" may be determined by the terminal device, may be predefined or configured by using signaling, or may be indicated by the first network device to the terminal device via the indication information (the indication information included in the handover configuration signaling in S601 or the indication information separately sent by the first network device to the terminal device). In this case, the terminal device determines, based on predefined or preconfigured signaling, that the expected handover information needs to be reported to the first network device. Further, the information or the parameters specifically included in the expected handover information are determined based on the indication information or determined by the terminal device, and the content of the information or the values of the parameters are further determined. In other words, in this case, the indication information may indicate the information or the parameters specifically included in the expected handover information. In this manner, the expected handover information reported by the terminal device is the expected handover information needed by the network device, so that the accuracy of the expected handover information reported by the terminal device can be improved

Optionally, in another possible implementation, behavior "the terminal device needs to report the expected handover information" and "information or parameters specifically included in the expected handover information" may be predefined or configured by using signaling. In this case, the terminal device determines, based on predefined or preconfigured signaling, that the expected handover information needs to be reported and the information or the parameters included in the expected handover information, and further determines the content of the information or the values of the parameters. In other words, in this case, S601 may not include the indication information, or the first network device may not need to separately send the indication information to the terminal device.

Optionally, in some implementations of this application, the indication information (the indication information included in the handover configuration signaling in S601 or the indication information separately sent by the first network device to the terminal device) may indicate an input parameter of the AI model and/or an input parameter of the sensing model. In this case, the terminal device may determine a value corresponding to each input parameter of the AI model and/or the sensing model, then input the value corresponding to each input parameter of the AI model and/or the sensing model into the AI model and/or the sensing model, and obtain a value of an output parameter of the AI model and/or a value of an output parameter of the sensing model by using the AI model and/or the sensing model.

After the value of the output parameter of the AI model and/or the value of the output parameter of the sensing model are/is obtained, in a possible implementation, the terminal device may directly use the value of the output parameter as the content of the information or the value of the parameter included in the expected handover information. Alternatively, in another possible implementation, the terminal device may further determine, based on the value of the output parameter, the content of the information or the value of the parameter included in the expected handover information. Alternatively, in still another possible implementation, "information or parameters specifically included in the expected handover information" may be predefined or configured by using signaling. In this case, the terminal device may obtain, based on the value of the output parameter, the content of the information or the values of the parameters included in the expected handover information. In this manner, the terminal device can quickly determine the value of the input parameter of the AI model and/or the value of the input parameter of the sensing model, so that complexity of obtaining the corresponding input parameter of the AI model and/or the corresponding input parameter of the sensing model by the terminal device is reduced, and the implementation is easy.

Further, the terminal device inputs the value of the input parameter of the AI model and/or the value of the input parameter of the sensing model into the AI model and/or the sensing model, to obtain the output parameter of the AI model and/or the output parameter of the sensing model; and further obtains the expected handover information based on the output parameter of the AI model and/or the output parameter of the sensing model. The accuracy of the expected handover information can be improved, the complexity of obtaining the expected handover information can be reduced, the implementation is easy, and efficiency of obtaining the expected handover information can be improved.

For example, the input parameter of the AI model and/or the input parameter of the sensing model may include at least one of a location of the terminal device, a movement speed of the terminal device, the power of the terminal device, the state of energy of the terminal device, a channel state of the terminal device, and a service status of the terminal device.

Optionally, in some implementations of this application, the indication information included in the handover configuration signaling in S601 or the indication information separately sent by the first network device to the terminal device may indicate an input parameter of the AI model and/or an input parameter of the sensing model. In this case, the terminal device may determine a value corresponding to each input parameter of the AI model and/or the sensing model, and then send, to the first network device, the value corresponding to each input parameter of the AI model and/or the sensing model. The first network device obtains a value of an output parameter of the AI model and/or a value of an output parameter of the sensing model by using the AI model and/or the sensing model based on the value corresponding to each input parameter of the AI model and/or the sensing model.

After the first network device obtains the value of the output parameter of the AI model and/or the value of the output parameter of the sensing model, in a possible implementation, the first network device may directly use the value of the output parameter as the content of the information or the value of the parameter included in the expected handover information. Alternatively, in another possible implementation, the first network device may further determine, based on the value of the output parameter, the content of the information or the value of the parameter included in the expected handover information. Alternatively, in still another possible implementation, "information or parameters specifically included in the expected handover information" is predefined. In this case, the first network device may obtain, by using the value of the output parameter, the content of the information or the values of the parameters included in the expected handover information. In other words, in this case, the indication information in S601 or the indication information separately sent by the first network device may indicate the terminal device to report the value corresponding to each input parameter of the AI model and/or the sensing model, and the expected handover information may be determined by the first network device. In this manner, the terminal device can quickly determine the value of the input parameter of the AI model and/or the value of the input parameter of the sensing model, so that complexity of obtaining the corresponding input parameter of the AI model and/or the corresponding input parameter of the sensing model by the terminal device is reduced, and the implementation is easy.

Further, the terminal device sends the value of the input parameter of the AI model and/or the value of the input parameter of the sensing model to the first network device. The first network device obtains the output parameter of the AI model and/or the output parameter of the sensing model by using the AI model and/or the sensing model based on the value of the input parameter of the AI model and/or the value of the input parameter of the sensing model, and further obtains the expected handover information based on the output parameter of the AI model and/or the output parameter of the sensing model. Because the first network device determines the expected handover information, it is ensured that the expected handover information is the expected handover information needed by the network device, and the accuracy of the expected handover information can be improved. In addition, the value of the output parameter is obtained by using the AI model and/or the sensing model, so that complexity of obtaining the value of the output parameter by the first network device by using the AI model and/or the sensing model can be reduced, the implementation is easy, and efficiency of obtaining the expected handover information can be improved.

Optionally, in some implementations of this application, the indication information included in the handover configuration signaling in S601 or the indication information separately sent by the first network device to the terminal device may indicate an output parameter of the AI model and/or an output parameter of the sensing model. In this case, the terminal device may obtain, by using the AI model and/or the sensing model, a value corresponding to each output parameter of the AI model and/or the sensing model.

After the value of the output parameter of the AI model and/or the value of the output parameter of the sensing model are/is obtained, in a possible implementation, the terminal device may directly use the value of the output parameter as the content of the information or the value of the parameter included in the expected handover information. Alternatively, in another possible implementation, the terminal device may further determine, based on the value of the output parameter, the content of the information or the value of the parameter included in the expected handover information. Alternatively, in still another possible implementation, "the information or the parameters included in the expected handover information" is predefined or configured by using signaling. In this case, the terminal device may obtain, by using the value of the output parameter, the content of the information or the values of the parameters included in the expected handover information. In this manner, the terminal device can quickly determine the output parameter of the artificial intelligence model and/or the output parameter of the sensing model, and can select or configure an appropriate artificial intelligence model based on the output parameter, and/or select or configure an appropriate sensing model based on the output parameter, to obtain the value of the corresponding output parameter, so that processing complexity of the terminal device is reduced, and the accuracy of the expected handover information is ensured.

Further, the terminal device obtains the expected handover information based on the value of the output parameter of the AI model and/or the value of the output parameter of the sensing model. The accuracy of the expected handover information can be improved, the complexity of obtaining the expected handover information can be reduced, and efficiency of obtaining the expected handover information can be improved.

For example, the output parameter of the AI model and/or the output parameter of the sensing model may include at least one of a location of the terminal device, a movement speed of the terminal device, the power of the terminal device, the state of energy of the terminal device, a channel state of the terminal device, and a service status of the terminal device.

Optionally, in some implementations of this application, the indication information included in the handover configuration signaling in S601 or the indication information separately sent by the first network device to the terminal device may indicate an output parameter of the AI model and/or an output parameter of the sensing model. In this case, the terminal device may obtain, by using the AI model and/or the sensing model, a value corresponding to each output parameter of the AI model and/or the sensing model, and then send the value corresponding to each output parameter of the AI model and/or the sensing model to the first network device.

After the first network device obtains the value of the output parameter of the AI model and/or the value of the output parameter of the sensing model, in a possible implementation, the first network device may directly use the value of the output parameter as the content of the information or the value of the parameter included in the expected handover information. Alternatively, in another possible implementation, the first network device may further determine, based on the value of the output parameter, the content of the information or the value of the parameter included in the expected handover information. Alternatively, in still another possible implementation, "the information or the parameters included in the expected handover information" is predefined. In this case, the first network device may obtain, by using the value of the output parameter, the content of the information or the values of the parameters included in the expected handover information. In other words, in this case, the indication information may indicate the terminal device to report the value corresponding to each output parameter of the AI model and/or the sensing model, and the expected handover information may be determined by the first network device. In this implementation, the terminal device can quickly determine the output parameter of the artificial intelligence model and/or the output parameter of the sensing model, and can select or configure an appropriate artificial intelligence model based on the output parameter, and/or select or configure an appropriate sensing model based on the output parameter, to obtain the value of the corresponding output parameter, so that processing complexity of the terminal device is reduced, and the accuracy of the expected handover information is ensured.

Further, the terminal device sends the value of the output parameter of the AI model and/or the value of the output parameter of the sensing model to the first network device. The first network device obtains the expected handover information based on the value of the output parameter of the AI model and/or the value of the output parameter of the sensing model. Because the first network device determines the expected handover information, it is ensured that the expected handover information is the expected handover information needed by the network device, and the accuracy of the expected handover information can be improved. In addition, the value of the output parameter is obtained by using the AI model and/or the sensing model, so that complexity of obtaining the value of the output parameter by the first network device by using the AI model and/or the sensing model can be reduced, the implementation is easy, and efficiency of obtaining the expected handover information can be improved.

S603: The terminal device sends a measurement result and the expected handover information to the first network device. Accordingly, the first network device receives the measurement result and the expected handover information.

The measurement result includes a measurement result corresponding to the measurement content in S601. For example, the measurement result includes the related parameter of the link between the terminal device and the first network device, for example, may include channel quality of the link, RSRPs, RSRQ, SINRs, and RSSIs that are measured based on different reference signals (for example, a CSI-RS, an SRS, and an SSB), and whether a trigger condition corresponding to the handover procedure is satisfied.

In a possible implementation, the terminal device may send the measurement result and the expected handover information to the first network device via a measurement report (Measurement Report). Alternatively, the measurement result and the expected handover information may be separately sent to the first network device via different signaling. This is not limited in this embodiment of this application.

For example, the expected handover information may include the content of the at least one of the following information or the value of the at least one of the following parameters:
the expected handover time, the expected handover location, the expected handover policy, the expected handover latency, and the expected rate of the data transmission during the handover that are determined by the terminal device, where each of the expected handover time, the expected handover location, the expected handover policy, the expected handover latency, and the expected rate of the data transmission during the handover may be understood as one type of information or parameter; and for descriptions of the parameters or the information, refer to the descriptions of the corresponding parameters or information in S602, and details are not described herein again.

For example, the expected handover time may mean that the terminal device expects that the related steps in the handover procedure start, at the one or more time points, to be performed. For example, the expected handover time may be the time point at which the first network device sends the handover request to the second network device. For another example, the expected handover time may alternatively be the time point at which the terminal device expects to receive the reconfiguration signaling.

For example, the expected handover location may mean that the terminal device expects that the related steps in the handover procedure start, at the one or more locations, to be performed.

For example, the expected handover policy may be any one or more of the conventional handover, the conditional handover, the dual active protocol stack handover, and the like.

For example, the expected handover latency may be the latency expected by the terminal device in the handover procedure. For example, the expected handover latency may be the latency between the time point at which the first network device performs S605 in the method 600 and the time point at which the first network device performs S608 in the method 600. For another example, the expected handover latency may alternatively be the latency between the time point at which the first network device performs S608 in the method 600 and the time point at which the terminal device performs S612 in the method 600.

For example, the expected rate of the data transmission during the handover may be the expected rate of the data transmission between the terminal device and the first network device in the cell handover procedure.

Optionally, the expected handover information may further include the content of the at least one of the following information or the value of the at least one of the following parameters:
the movement information predicted by the terminal device, the power of the terminal device, and the state of energy of the terminal device, where each of the movement information predicted by the terminal device, the power of the terminal device, and the state of energy of the terminal device may be understood as one type of information or parameter.

For example, the movement information predicted by the terminal device may be the predicted future movement direction or future location of the terminal device.

For example, the power of the terminal device may be the specific value or the value range of the power of the terminal device. For example, the value of the power of the terminal device is the range of the maximum power that can be supported by the terminal device.

For example, the value of the state of energy of the terminal device may be the value of the current energy of the terminal device (for example, the current battery level of the terminal device).

Optionally, the expected handover information may further include the content of the at least one of the following information or the value of the at least one of the following parameters:

The handover reliability, the probability of the expected handover time, the probability of the expected handover location, the probability of the expected handover policy, the probability of the expected handover latency, the probability of the expected rate of the data transmission during the handover, and the like, where each of the handover reliability, the probability of the expected handover time, the probability of the expected handover location, the probability of the expected handover policy, the probability of the expected handover latency, and the probability of the expected rate of the data transmission during the handover may be understood as one type of information or parameter.

For example, the handover reliability may be the probability that the terminal device is successfully handed over to the second network device.

For example, the probability of the expected handover time may be the probability of the one or more handover times expected by the terminal device. For example, values of probabilities of the expected handover time may be as follows: A probability that the handover is performed at the expected ss^{th} milliseconds of a T^{th} second is 0.6, and a probability that the handover is performed at the expected nn^{th} milliseconds of the T^{th} second is 0.4, indicating that the terminal device more expects that the handover is performed at the ss^{th} milliseconds of the T^{th} second.

For example, the probability of the expected handover policy may be the probability of the one or more handover policies expected by the terminal device. For example, a value of a probability of the conditional handover may be 0.8, and a probability of the dual active protocol stack handover may be 0.2, indicating that a handover policy that the terminal device more expects is the conditional handover.

For example, the probability of the expected handover location may be a probability that the related steps in the handover procedure start, at the one or more locations expected by the terminal device, to be performed.

For example, the probability of the expected handover latency may be the probability of the one or more handover latencies expected by the terminal device. For example, if the handover latencies expected by the terminal device include 15 ms and 30 ms, values of probabilities of the handover latencies expected by the terminal device may be as follows: A probability that the expected handover latency is 30 ms is 0.4, and a probability that the expected handover latency is 15 ms is 0.6, indicating that a handover latency that the terminal device more expects is 15 ms.

For example, the probability of the expected rate of the data transmission during the handover may be the probability of the data transmission rate expected by the terminal device during the cell handover. For example, values of probabilities of expected rates of the data transmission during the handover may be as follows: A probability that the expected rate is 200 Kbps is 0.3, and a probability that the expected rate is 300 Kbps is 0.5, indicating that a data transmission rate that the terminal device more expects is 300 Kbps.

S604: The first network device determines, based on the measurement result and the expected handover information, whether to perform handover.

For example, the first network device may determine a channel state based on a channel quality parameter, the RSRPs, the RSRQ, the SINRs, the RSSIs, and the like in the measurement result. When the channel state satisfies a specific condition or threshold, the first network device may determine that the handover needs to be performed.

In this embodiment of this application, when determining whether to perform handover, the first network device may further consider the expected handover information, to determine, based on consideration of the expected handover information, whether to perform handover and related parameters (for example, including a handover time, a handover location, and a handover latency) of the handover process.

In a possible implementation, when the expected handover time and the expected handover latency that are provided by the terminal device match a processing time or a capability of the first network device, the first network device may determine to perform handover, and perform cell handover based on the expected handover time and/or the expected handover latency of the terminal device.

On the contrary, when the expected handover time and the expected handover latency that are provided by the terminal device do not match a processing time of the first network device, the first network device may determine not to perform handover, or not perform handover based on the expected handover time and/or the expected handover latency of the terminal device.

In a possible implementation, the first network device may determine the handover time based on the probability of the expected handover time. If a probability corresponding to an expected handover time is higher, the first network device may determine to perform cell handover at the time point.

For example, if the terminal device determines a plurality of different expected handover times and probabilities respectively corresponding to the plurality of different expected handover times, in a possible implementation, the terminal device may report, to the first network device, only an expected handover time having a highest probability and the probability corresponding to the expected handover time. After receiving the expected handover time and the probability corresponding to the expected handover time (namely, the highest probability in the probabilities of the plurality of expected handover times), the first network device determines whether the probability corresponding to the expected handover time satisfies a requirement (for example, whether a probability value is greater than a preset value). If the probability corresponding to the expected handover time satisfies the requirement (for example, the probability value is greater than the preset value), the first network device may perform cell handover based on the expected handover time.

If the terminal device determines a plurality of different expected handover times and probabilities respectively corresponding to the plurality of different expected handover times, in another possible implementation, the terminal device may report, to the first network device, the plurality of different expected handover times and the probabilities respectively corresponding to the plurality of different expected handover times, that is, report the probabilities of the plurality of expected handover times to the first network device. After receiving the plurality of different expected handover times and the probabilities respectively corresponding to the plurality of different expected handover times, the first network device may determine a highest probability in the probabilities of the plurality of expected handover times, and further determine whether the highest probability satisfies a requirement (for example, whether a probability value is greater than a preset value). If the highest probability satisfies the requirement (for example, the probability value is greater than the preset value), the first network device may perform cell handover based on an expected handover time corresponding to the highest probability.

If the terminal device determines a plurality of different expected handover times and probabilities respectively corresponding to the plurality of different expected handover times, in still another possible implementation, the terminal device may report, to the first network device, the plurality of different expected handover times and the probabilities respectively corresponding to the plurality of different expected handover times, that is, report the probabilities of the plurality of expected handover times to the first network device. After receiving the plurality of different expected handover times and the probabilities respectively corresponding to the plurality of different expected handover times, the first network device may first determine, in the probabilities of the plurality of expected handover times, one or more probability values that satisfy a requirement (for example, a probability value is greater than a preset value). If only one probability value satisfies the requirement, the first network device may perform cell handover based on an expected handover time corresponding to the probability value. If a plurality of probability values satisfy the requirement, the first network device may determine a target handover time in expected handover times corresponding to the plurality of probability values that satisfy the requirement, to perform cell handover. Specifically, an expected handover time having a highest probability value may be used as the target handover time, or an appropriate expected handover time is selected as the target handover time based on local information of the first network device.

If the terminal device determines a plurality of different expected handover times and probabilities respectively corresponding to the plurality of different expected handover times, in yet another possible implementation, the terminal device may determine, in the probabilities of the plurality of expected handover times, one or more probability values that satisfy a requirement (for example, a probability value is greater than a preset value), and then report, to the first network device, the one or more probability values that satisfy the requirement and an expected handover time corresponding to each of the one or more probability values. After the first network device receives the expected handover time corresponding to each of the one or more probability values, if the first network device receives only one probability value and an expected handover time corresponding to the probability value, the first network device may perform cell handover based on the expected handover time corresponding to the probability value. If the first network device receives a plurality of probability values and expected handover times respectively corresponding to the plurality of probability values, the first network device may determine a target handover time in the expected handover times corresponding to the plurality of probability values, to perform cell handover. Specifically, an expected handover time having a highest probability value may be used as the target handover time, or an appropriate expected handover time is selected as the target handover time based on local information of the first network device.

In a possible implementation, the first network device may determine the handover latency based on the probability of the expected handover latency. If a probability corresponding to an expected handover latency is higher, the first network device may perform handover based on the latency.

For example, if the terminal device determines a plurality of different expected handover latencies and probabilities respectively corresponding to the plurality of different expected handover latencies, in a possible implementation, the terminal device may report, to the first network device, only an expected handover latency having a highest probability and a probability corresponding to the expected handover latency. After receiving the expected handover latency and the probability (namely, the highest probability in the probabilities of the plurality of expected handover latencies) corresponding to the expected handover latency, the first network device determines whether the probability corresponding to the expected handover latency satisfies a requirement (for example, whether a probability value is greater than a preset value). If the probability corresponding to the expected handover latency satisfies the requirement, the first network device may perform cell handover based on the expected handover latency.

If the terminal device determines a plurality of different expected handover latencies and probabilities respectively corresponding to the plurality of different expected handover latencies, in another possible implementation, the terminal device may report, to the first network device, the plurality of different expected handover latencies and the probabilities respectively corresponding to the plurality of different expected handover latencies, that is, report the probabilities of the plurality of expected handover latencies to the first network device. After receiving the plurality of different expected handover latencies and the probabilities respectively corresponding to the plurality of different expected handover latencies, the first network device may determine a target handover latency in the probabilities of the plurality of expected handover latencies, to perform cell handover by using the target handover latency. Specifically, a handover latency having a highest probability value may be used as the target handover latency, or an appropriate handover latency is selected based on local information of the first network device to perform cell handover.

If the terminal device determines a plurality of different expected handover latencies and probabilities respectively corresponding to the plurality of different expected handover latencies, in still another possible implementation, the terminal device may report, to the first network device, the plurality of different expected handover latencies and the probabilities respectively corresponding to the plurality of different expected handover latencies, that is, report the probabilities of the plurality of expected handover latencies to the first network device. After receiving the plurality of different expected handover latencies and the probabilities respectively corresponding to the plurality of different expected handover latencies, the first network device may first determine, in the probabilities of the plurality of expected handover latencies, one or more probability values that satisfy a requirement (for example, a probability value is greater than a preset value). If only one probability value satisfies the requirement, the first network device may perform cell handover based on an expected handover latency corresponding to the probability value. If a plurality of probability values satisfy the requirement, the first network device may determine a target handover latency in the plurality of probability values that satisfy the requirement, to perform cell handover by using the target handover latency. Specifically, a handover latency having a highest probability value may be used as the target handover latency, or an appropriate handover latency is selected based on local information of the first network device to perform cell handover.

If the terminal device determines a plurality of different expected handover latencies and probabilities respectively corresponding to the plurality of different expected handover latencies, in yet another possible implementation, the terminal device may determine, in the probabilities of the plurality of expected handover latencies, one or more probability values that satisfy a requirement (for example, a probability value is greater than a preset value), and then report, to the first network device, the one or more probability values that satisfy the requirement and an expected handover latency corresponding to each of the one or more probability values. After the first network device receives the expected handover latency corresponding to each of the one or more probability values, if the first network device receives only one probability value and an expected handover latency corresponding to the probability value, the first network device may perform cell handover based on the expected handover latency corresponding to the probability value. If the first network device receives a plurality of probability values and expected handover latencies respectively corresponding to the plurality of probability values, the first network device may determine a target handover latency in the plurality of probability values, to perform cell handover by using the target handover latency. Specifically, a handover latency having a highest probability value may be used as the target handover latency, or an appropriate handover latency is selected based on local information of the first network device to perform cell handover.

In a possible implementation, the first network device may determine a sending moment of related signaling in the handover procedure based on the expected handover location. For example, the first network device may determine the sending moment of the related signaling in the handover procedure with reference to the speed of the terminal device and a current location of the terminal device, for example, a moment at which the first network device sends the handover request to the second network device in S605 in the method 600 and/or a moment at which the first network device sends the reconfiguration signaling to the terminal device in S608 in the method 600.

In a possible implementation, the first network device may determine the handover location based on the probability of the expected handover location. If a probability corresponding to an expected handover location is higher, the first network device may determine to start, at the location, to perform the related steps in the handover procedure.

For example, if the terminal device determines a plurality of different expected handover locations and probabilities respectively corresponding to the plurality of different expected handover locations, in a possible implementation, the terminal device may report, to the first network device, only an expected handover location having a highest probability and the probability corresponding to the expected handover location. After receiving the expected handover location and the probability (namely, the highest probability in the probabilities of the plurality of expected handover locations) corresponding to the expected handover location, the first network device determines whether the probability corresponding to the expected handover location satisfies a requirement (for example, whether a probability value is greater than a preset value). If the probability corresponding to the expected handover location satisfies the requirement, the first network device may start, at the expected handover location, to perform the related steps in the handover procedure.

If the terminal device determines a plurality of different expected handover locations and probabilities respectively corresponding to the plurality of different expected handover locations, in another possible implementation, the terminal device may report, to the first network device, the plurality of different expected handover locations and the probabilities respectively corresponding to the plurality of different expected handover locations, that is, report the probabilities of the plurality of expected handover locations to the first network device. After receiving the plurality of different expected handover locations and the probabilities respectively corresponding to the plurality of different expected handover locations, the first network device may determine a highest probability in the probabilities of the plurality of expected handover locations, and further determine whether the highest probability satisfies a requirement (for example, whether a probability value is greater than a preset value). If the highest probability satisfies the requirement, the first network device may start, at an expected handover location corresponding to the highest probability, to perform the related steps in the handover procedure.

If the terminal device determines a plurality of different expected handover locations and probabilities respectively corresponding to the plurality of different expected handover locations, in still another possible implementation, the terminal device may report, to the first network device, the plurality of different expected handover locations and the probabilities respectively corresponding to the plurality of different expected handover locations, that is, report the probabilities of the plurality of expected handover locations to the first network device. After receiving the plurality of different expected handover locations and the probabilities respectively corresponding to the plurality of expected handover locations, the first network device may first determine, in the probabilities of the plurality of expected handover locations, one or more probability values that satisfy a requirement (for example, a probability value is greater than a preset value). If only one probability value satisfies the requirement, the first network device starts, at an expected handover location corresponding to the probability value, to perform the related steps in the handover procedure. If a plurality of probability values satisfy the requirement, the first network device may determine a target handover location in the plurality of probability values that satisfy the requirement, to start the related steps in the handover procedure at the target handover location. Specifically, a handover location having a highest probability value may be used as the target handover location, or an appropriate handover location is selected based on local information of the first network device to start to perform the related steps in the handover procedure.

If the terminal device determines a plurality of different expected handover locations and probabilities respectively corresponding to the plurality of different expected handover locations, in yet another possible implementation, the terminal device may determine, in the probabilities of the plurality of expected handover locations, one or more probability values that satisfy a requirement (for example, a probability value is greater than a preset value), and then report, to the first network device, the one or more probability values that satisfy the requirement and an expected handover location corresponding to each of the one or more probability values. After the first network device receives the expected handover locations corresponding to each of the one or more probability values, if the first network device receives only one probability value and an expected handover location corresponding to the probability value, the first network device may start, at the expected handover location corresponding to the probability value, to perform the related steps in the handover procedure. If the first network device receives a plurality of probability values and expected handover locations respectively corresponding to the plurality of probability values, the first network device may determine a target handover location in the plurality of probability values, to start the related step in the handover procedure at the target handover location. Specifically, a handover location having a highest probability value may be used as the target handover location, or an appropriate handover location is selected based on local information of the first network device to start to perform the related steps in the handover procedure.

In a possible implementation, the first network device may determine, based on the handover reliability, whether to perform handover. When the probability that the terminal device is successfully handed over to the second network device is greater than or equal to a preset value, the first network device may determine to perform handover.

In a possible implementation, the first network device may further determine a finally actually used handover policy based on the expected handover policy sent by the terminal device. For example, when the expected handover policy sent by the terminal device is the DAPS handover policy, the first network device may continue, based on a requirement of the terminal device, to send downlink data to the terminal device or continue to receive uplink data sent by the terminal device, until the first network device is released.

In a possible implementation, the first network device may determine a handover policy based on the probability of the expected handover policy. If a probability corresponding to an expected handover policy is higher, the first network device may determine to perform cell handover by using the handover policy.

For example, if the terminal device determines a plurality of different expected handover policies and probabilities respectively corresponding to the plurality of different expected handover policies, in a possible implementation, the terminal device may report, to the first network device, only an expected handover policy having a highest probability and the probability corresponding to the expected handover policy. After receiving the expected handover policy and the probability (namely, the highest probability in the probabilities of the plurality of expected handover policies) corresponding to the expected handover policy, the first network device determines whether the probability corresponding to the expected handover policy satisfies a requirement (for example, whether a probability value is greater than a preset value). If the probability corresponding to the expected handover policy satisfies the requirement (for example, the probability value is greater than the preset value), the first network device may perform cell handover by using the expected handover policy.

If the terminal device determines a plurality of different expected handover policies and probabilities respectively corresponding to the plurality of different expected handover policies, in another possible implementation, the terminal device may report, to the first network device, the plurality of different expected handover policies and the probabilities respectively corresponding to the plurality of different expected handover policies, that is, report the probabilities of the plurality of expected handover policies to the first network device. After receiving the plurality of different expected handover policies and the probabilities respectively corresponding to the plurality of different expected handover policies, the first network device may determine a highest probability in the probabilities of the plurality of expected handover policies, and further determine whether the highest probability satisfies a requirement (for example, whether a probability value is greater than a preset value). If the highest probability satisfies the requirement, the first network device may perform cell handover by using an expected handover policy corresponding to the highest probability.

If the terminal device determines a plurality of different expected handover policies and probabilities respectively corresponding to the plurality of different expected handover policies, in still another possible implementation, the terminal device may report, to the first network device, the plurality of different expected handover policies and the probabilities respectively corresponding to the plurality of different expected handover policies, that is, report the probabilities of the plurality of expected handover policies to the first network device. After receiving the plurality of different expected handover policies and the probabilities respectively corresponding to the plurality of different expected handover policies, the first network device may first determine, in the probabilities of the plurality of expected handover policies, one or more probability values that satisfy a requirement (for example, a probability value is greater than a preset value). If only one probability value satisfies the requirement, the first network device may perform cell handover by using an expected handover policy corresponding to the probability value. If a plurality of probability values satisfy the requirement, the first network device may determine a target handover policy in the plurality of probability values that satisfy the requirement, to perform cell handover by using the target handover policy. Specifically, a handover policy having a highest probability value may be used as the target handover policy, or an appropriate handover policy is selected based on local information of the first network device to perform cell handover.

If the terminal device determines a plurality of different expected handover policies and probabilities respectively corresponding to the plurality of different expected handover policies, in yet another possible implementation, the terminal device may determine, in the probabilities of the plurality of expected handover policies, one or more probability values that satisfy a requirement (for example, a probability value is greater than a preset value), and then report, to the first network device, the one or more probability values that satisfy the requirement and an expected handover policy corresponding to each of the one or more probability values. After the first network device receives the expected handover policy corresponding to each of the one or more probability values, if the first network device receives only one probability value and an expected handover policy corresponding to the probability value, the first network device may perform cell handover by using the expected handover policy corresponding to the probability value. If the first network device receives a plurality of probability values and expected handover policies respectively corresponding to the plurality of probability values, the first network device may determine a target handover policy in the plurality of probability values, to perform cell handover by using the target handover policy. Specifically, a handover policy having a highest probability value may be used as the target handover policy, or an appropriate handover policy is selected based on local information of the first network device to perform cell handover.

In a possible implementation, the first network device may determine, based on the movement information predicted by the terminal device, whether to perform handover. If the terminal device is not to move, in the future, to a coverage area that is not of the first network device, or the terminal device is to be located, in the future only in a short time period, in a coverage area that is not of the first network device, the first network device may choose not to perform handover. In addition, the first network device may further determine the handover time based on the movement information predicted by the terminal device. For example, the first network device may determine the sending moment of the related signaling in the handover procedure based on the future movement direction or the future location of the terminal device. For example, the first network device may determine the sending moment of the related signaling in the handover procedure with reference to the speed of the terminal device and the current location of the terminal device, for example, the moment at which the first network device sends the handover request to the second network device in S605 in the method 600 and/or the moment at which the first network device sends the reconfiguration signaling to the terminal device in S608 in the method 600.

In a possible implementation, the first network device may determine, based on the power of the terminal device, whether to perform handover. For example, when the maximum power that can be supported by the terminal device is greater than or equal to a preset value, if the terminal device is to be located, in the future only in a short time period, in a coverage area that is not of the first network device, and transmission between the terminal device and the first network device is not interrupted when the terminal device performs transmission based on a power, the first network device may determine not to perform handover.

In a possible implementation, the first network device may determine, based on the value of the state of energy of the terminal device, whether to perform handover and the handover time. For example, when the value of the current energy of the terminal device (for example, the current battery level of the terminal device) is less than or equal to a preset value, to ensure that transmission is not interrupted, the first network device needs to complete the handover as soon as possible, and determine the sending moment of the related signaling in the handover procedure. For example, the sending moment may include the moment at which the first network device sends the handover request to the second network device in S605 in the method 600 and/or the moment at which the first network device sends the reconfiguration signaling to the terminal device in S608 in the method 600.

In a possible implementation, the first network device may further determine a modulation order and a code rate of the data transmission based on the expected rate that is of the data transmission during the handover and that is sent by the terminal device. For example, when the handover policy is the DAPS handover policy, transmission of uplink data and/or downlink data is continuously performed between the first network device and the terminal device until the first network device is released. The first network device may determine, based on the expected rate that is of the data transmission during the handover and that is reported by the terminal device, the modulation order and the code rate that are of data and that match the expected rate.

In a possible implementation, the first network device may determine, based on the probability of the expected rate of the data transmission during the handover, an actual rate of the data transmission during the handover. If a probability corresponding to an expected rate is higher, the first network device may perform data transmission with the terminal device by using the rate during the handover.

For example, if the terminal device determines a plurality of different expected rates of the data transmission and probabilities respectively corresponding to the plurality of different expected rates, in a possible implementation, the terminal device may report, to the first network device, only an expected rate that is of the data transmission and that has a highest probability and the probability corresponding to the expected rate. After receiving the expected rate and the probability (namely, the highest probability in the probabilities of the plurality of expected rates) corresponding to the expected rate, the first network device determines whether the probability corresponding to the expected rate of the data transmission satisfies a requirement (for example, whether a probability value is greater than a preset value). If the probability corresponding to the expected rate of the data transmission satisfies the requirement, the first network device may perform cell handover by using the expected rate of the data transmission.

If the terminal device determines a plurality of different expected rates of the data transmission and probabilities respectively corresponding to the plurality of different expected rates, in another possible implementation, the terminal device may report, to the first network device, the plurality of different expected rates and the probabilities respectively corresponding to the plurality of different expected rates, that is, report the probabilities of the plurality of expected rates of the data transmission to the first network device. After receiving the plurality of different expected rates of the data transmission and the probabilities respectively corresponding to the plurality of different expected rates, the first network device may determine a highest probability in the probabilities of the plurality of expected rates, and further determine whether the highest probability satisfies a requirement (for example, whether a probability value is greater than a preset value). If the highest probability satisfies the requirement, the first network device may perform cell handover by using an expected rate that is of the data transmission and that corresponds to the highest probability.

If the terminal device determines a plurality of different expected rates of the data transmission and probabilities respectively corresponding to the plurality of different expected rates, in still another possible implementation, the terminal device may report, to the first network device, the plurality of different expected rates and the probabilities respectively corresponding to the plurality of different expected rates, that is, report, to the first network device, the probabilities respectively corresponding to the plurality of expected rates. After receiving the plurality of different expected rates and the probabilities respectively corresponding to the plurality of expected rates, the first network device may first determine, in the probabilities of the plurality of expected rates, one or more probability values that satisfy a requirement (for example, a probability value is greater than a preset value). If only one probability value satisfies the requirement, the first network device may perform cell handover by using an expected rate that is of the data transmission and that corresponds to the probability value. If a plurality of probability values satisfy the requirement, the first network device may determine a target rate in the plurality of probability values that satisfy the requirement, to perform cell handover by using the target rate. Specifically, a rate having a highest probability value may be used as the target rate, or an appropriate rate is selected based on local information of the first network device to perform cell handover.

If the terminal device determines a plurality of different expected rates of the data transmission and probabilities respectively corresponding to the plurality of different expected rates, in yet another possible implementation, the terminal device may determine, in the probabilities respectively corresponding to the plurality of expected rates, one or more probability values that satisfy a requirement (for example, a probability value is greater than a preset value), and then report, to the first network device, the one or more probability values that satisfy the requirement and expected rates respectively corresponding to the one or more probability values. After the first network device receives the expected rates respectively corresponding to the one or more probability values, if the first network device receives only one probability value and an expected rate corresponding to the probability value, the first network device may perform cell handover by using the expected rate that is of the data transmission and that corresponds to the probability value. If the first network device receives a plurality of probability values and expected rates that are of the data transmission and that respectively correspond to the plurality of probability values, the first network device may determine a probability value in the plurality of probability values and a corresponding target rate, to perform cell handover by using the target rate. Specifically, a rate having a highest probability value may be used as the target rate, or an appropriate rate is selected based on local information of the first network device to perform cell handover.

The preset value in this application may be agreed on by a receiving end and a transmitting end, may be predefined in a protocol, or may be preconfigured.

S605: When the first network device determines that the handover needs to be performed, the first network device sends the handover request to the second network device (which may also be referred to as a target network device). Accordingly, the second network device receives the handover request.

Optionally, the handover request may include at least one of the following information:
an ID of the second network device, a cell-RNTI of the terminal device in the first network device, an inactive time of the terminal device, antenna information of the terminal device, a downlink carrier frequency of the terminal device, QoS information, synchronization information, channel information of the terminal device, and the like, where it may be understood that, in this embodiment of this application, the terminal device needs to be handed over from a cell covered by the first network device to a cell covered by the second network device.

S606: The second network device determines, based on the handover request, whether to perform handover.

S607: When the second network device determines that the handover needs to be performed, the second network device prepares handover between a physical layer and a MAC layer, and sends handover request acknowledge (handover request acknowledge, HO request ACK) information to the first network device. Accordingly, the first network device receives the request acknowledge information.

S608: After receiving the handover request acknowledge information, the first network device triggers handover of the link between the terminal device and the first network device, and sends the reconfiguration signaling to the terminal device. Accordingly, the terminal device receives the reconfiguration signaling.

In a possible implementation, the reconfiguration signaling may include the ID of the second network device, a cell-RNTI of the terminal device in the second network device, a security algorithm of the second network device, RACH resource information of the second network device, synchronization information of the second network device, reference signal configuration information of the second network device, and the like.

In a possible implementation, the reconfiguration signaling is an RRC reconfiguration (RRC Reconfiguration) message.

In a possible implementation, the reference signal configuration information may include: time domain resource information, frequency domain resource information, code domain resource information, and the like of the SRS. A specific form of a reference signal is not limited in this embodiment of this application. For example, configuration information of another uplink reference signal (for example, a demodulation reference signal (demodulation reference signal, DMRS)) or downlink reference signal (a cell reference signal (cell reference signal, CRS)) may be further included.

In a possible implementation, the reconfiguration signaling in S608 may also be referred to as first information.

S609: The terminal device sends PDCP status information to the second network device. Accordingly, the second network device receives the PDCP status information.

S610: The second network device determines PDCP information between the second network device and the terminal device based on the PDCP status information.

S611: A random access (RACH) procedure is performed between the terminal device and the second network device. In the RACH procedure, the second network device sends TA information to the terminal device. Accordingly, the terminal device receives the timing advance information.

S612: The terminal device completes synchronization with the second network device, and sends a reconfiguration complete message to the second network device, to confirm completion of the handover procedure to the second network device. Accordingly, the second network device receives the reconfiguration complete message.

In a possible implementation, the reconfiguration complete message may be an RRC reconfiguration complete (RRC Reconfiguration Complete) message.

According to the cell handover method provided in this application, in the process in which cell handover is performed on the terminal device, the terminal device reports, to the network device, the expected handover information determined by the terminal. When determining whether to perform handover, the network device makes the decision with reference to the expected handover information of the terminal device, so that the handover procedure can be more accurately controlled, to improve the success probability of the handover. For example, the network device can be enabled to more accurately determine the handover time, the handover latency, the data transmission rate used during the handover, and the sending moment of the related signaling in the handover procedure, to more accurately control the sending time point of each piece of signaling in the handover procedure; and the network device can be enabled to select a handover policy that better matches the terminal device, to improve the success probability of the handover and efficiency of the handover.

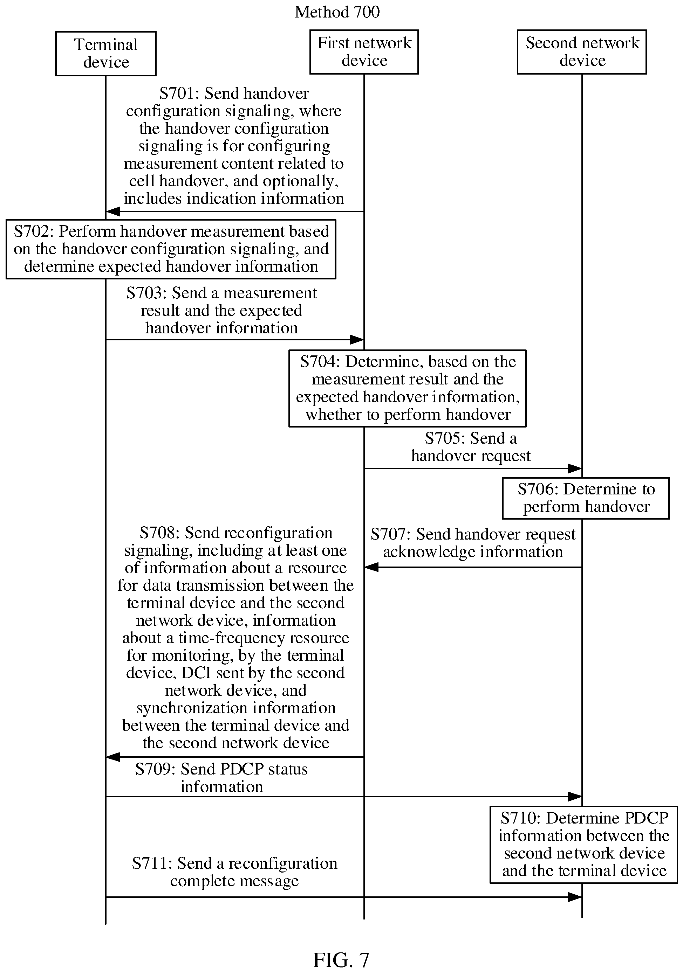

FIG. 7 is a schematic interaction diagram of a cell handover method 700 according to an embodiment of this application. The method 700 may be applied to the scenario shown in FIG. 4, or certainly may be applied to another communication scenario. This is not limited in this embodiment of this application.

As shown in FIG. 7, the method 700 shown in FIG. 7 may include S701 to S711. The following describes in detail the steps in the method 700 with reference to FIG. 7.

S701: A first network device (which may also be referred to as a source network device) whose coverage currently includes a terminal device sends handover configuration signaling to the terminal device, where the handover configuration signaling is for configuring measurement content related to cell handover. Accordingly, the terminal device receives the handover configuration signaling.

S702: The terminal device performs handover measurement based on the handover configuration signaling, and determines expected handover information.

S703: The terminal device sends a measurement result and the expected handover information to the first network device. Accordingly, the first network device receives the measurement result and the expected handover information.

S704: The first network device determines, based on the measurement result and the expected handover information, whether to perform handover.

S705: When the first network device determines that the handover needs to be performed, the first network device sends a handover request to a second network device (which may also be referred to as a target network device). Accordingly, the second network device receives the handover request.

S706: The second network device determines, based on the handover request, whether to perform handover.

S707: When the second network device determines that the handover needs to be performed, the second network device performs handover between a physical layer and a MAC layer, and sends handover request acknowledge information to the first network device. Accordingly, the first network device receives the request acknowledge information.

For specific descriptions of S701 to S707, refer to the specific descriptions of S601 to S607 in the method 600. For brevity, details are not described herein again.

S708: After receiving the handover request acknowledge information, the first network device triggers handover of a link between the terminal device and the first network device, and sends reconfiguration signaling to the terminal device. Accordingly, the terminal device receives the reconfiguration signaling.

In a possible implementation, the reconfiguration signaling is an RRC reconfiguration (RRC Reconfiguration) message.

In a possible implementation, the reconfiguration signaling may include at least one of an ID of the second network device, a cell-RNTI of the terminal device in the second network device, a security algorithm of the second network device, synchronization information of the second network device, and reference signal configuration information of the second network device.

In a possible implementation, the reconfiguration signaling may further include at least one of information about a resource for data transmission between the terminal device and the second network device, information about a time-frequency resource for monitoring, by the terminal device, DCI sent by the second network device (namely, information about a time-frequency resource of a control resource set (control resource set, CORESET) for monitoring the DCI), and the synchronization information between the terminal device and the second network device. In this case, the terminal device may not need to perform a random access (RACH) procedure between the terminal device and the second network device, that is, skip the random access process between the terminal device and the second network device, and directly send a reconfiguration complete message to the second network device after S710 below.

In some implementations, the information about a resource for data transmission between the terminal device and the second network device includes time domain resource information, frequency domain resource information, and code domain resource information of the data transmission.

In some implementations, the synchronization information between the terminal device and the second network device may include TA information. The TA information is for performing clock synchronization between the terminal device and the second network device.

S709: The terminal device sends PDCP status information to the second network device. Accordingly, the second network device receives the PDCP status information.

S710: The second network device determines PDCP information between the second network device and the terminal device based on the PDCP status information.

S711: The terminal device completes synchronization with the second network device, and sends the reconfiguration complete message to the second network device, to confirm completion of a handover procedure to the second network device. Accordingly, the second network device receives the reconfiguration complete message.

In a possible implementation, the reconfiguration complete message may be an RRC reconfiguration complete (RRC Reconfiguration Complete) message.

The reconfiguration signaling in S708 may further include at least one of the information about a resource for data transmission between the terminal device and the second network device, the information about the time-frequency resource in the control resource set used by the terminal device to monitor the DCI sent by the second network device, and the synchronization information between the terminal device and the second network device. That, signaling that needs to be communicated by using the RACH procedure is sent to the terminal device in advance. Therefore, the terminal device may skip the random access process between the terminal device and the second network device, that is, directly perform handover after S708, and communicate data and control signaling with the second network device, so that a cell handover latency can be reduced, and efficiency of the handover can be improved.

According to the cell handover method provided in this application, in the process in which the cell handover is performed on the terminal device, the terminal device reports, to the network device, the expected handover information determined by the terminal. When determining whether to perform handover, the network device makes the decision with reference to the expected handover information of the terminal device, so that the handover procedure can be more accurately controlled, to improve the success probability of the handover. In addition, the signaling that needs to be communicated between the terminal device and the second network device by using the random access process (RACH procedure) is sent to the terminal device in advance, and the terminal device may skip the random access process between the terminal device and the second network device, so that the cell handover latency can be reduced, and the efficiency of the handover can be improved.

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing method embodiments may be unnecessary, or some steps may be newly added. Alternatively, any two or more of the foregoing embodiments are combined. A modified, changed, or combined solution also falls within the scope of embodiments of this application.

It should be further understood that division of various manners, cases, categories, and embodiments in embodiments of this application is merely intended for ease of description, and should not constitute a particular limitation. The features in the various manners, categories, cases, and embodiments may be combined without contradiction.

It should be further understood that various numerals in embodiments of this application are merely distinguished for ease of description, but are not intended to limit the scope of embodiments of this application. The sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of embodiments of this application emphasize differences between embodiments. For same or similar parts that are not mentioned, refer to each other. For brevity, details are not described herein again.

It should be further understood that, in embodiments of this application, "predefine" or "preset" may be implemented by pre-storing corresponding code or a corresponding table in a device, or in another manner that may be for indicating related information. A specific implementation of "predefine" or "preset" is not limited in this application.

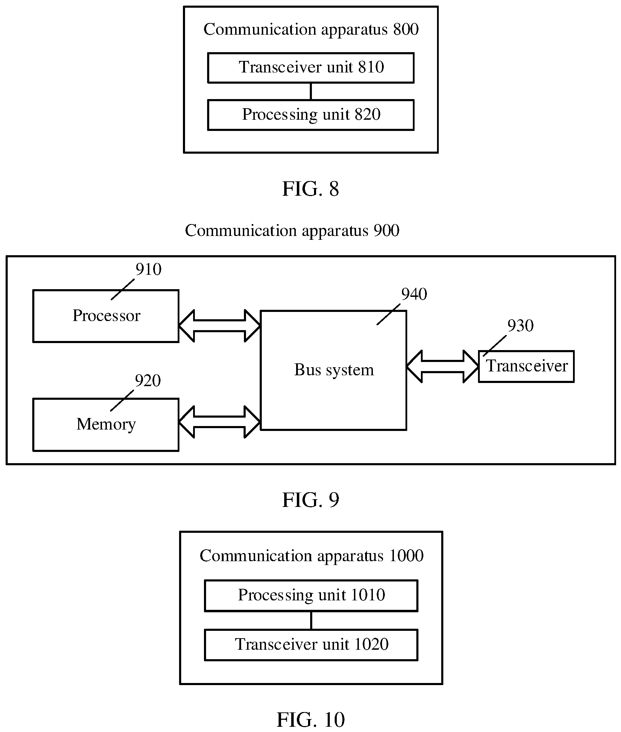

The foregoing describes in detail the cell handover methods in embodiments of this application with reference to FIG. 1 to FIG. 7. The following describes in detail communication apparatus in embodiments of this application with reference to FIG. 8 to FIG. 12.

In embodiments, a terminal device and network devices (including a first network device and a second network device) may be divided into functional modules according to the foregoing methods. For example, each functional module may be obtained through division based on each corresponding function, or two or more functions may be integrated into one processing module. The integrated module may be implemented in a form of hardware. It should be noted that the division into the modules in embodiments is an example, and is merely logical function division. In actual implementation, there may be another division manner.

It should be noted that related content of the steps in the foregoing method embodiments may be referenced to function descriptions of corresponding functional modules. Details are not described herein again.

The terminal device and the network device (including the first network device and the second network device) provided in embodiments of this application are configured to perform any cell handover method provided in the foregoing method embodiments, and therefore can achieve same effects as the foregoing implementation method. When the integrated unit is used, the terminal device or the network device may include a processing module, and an optional storage module and communication module. The processing module may be configured to control and manage an action of the terminal device or the network device, for example, may be configured to support the terminal device or the network device in performing steps performed by a processing unit. The storage module may be configured to support storage of program code, data, and the like. The communication module may be configured to support communication between the terminal device or the network device and another device.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of digital signal processing (digital signal processing, DSP) and a microprocessor. The storage module may be a memory. The communication module may be specifically a device that interacts with another electronic device, such as a radio frequency circuit, a Bluetooth chip, or a Wi-Fi chip.

For example, FIG. 8 is a schematic block diagram of a communication apparatus 800 according to an embodiment of this application. The communication apparatus 800 may correspond to the terminal device described in the method 500 to the method 700, or may be a chip or a component used in the terminal device. In addition, modules or units in the communication apparatus 800 are separately configured to perform actions or processing processes performed by the terminal device in any one of the method 500 to the method 700.

As shown in FIG. 8, the communication apparatus 800 includes a transceiver unit 810 and a processing unit 820. The transceiver unit 810 is configured to perform specific signal receiving and sending under control of the processing unit 820.

In some possible implementations, the transceiver unit 810 is configured to send, to a first network device, expected handover information and a measurement result that are determined by a terminal device; and the transceiver unit 810 is further configured to receive first information sent by the first network device, where the first information is used by the terminal device to access a second network device.

Optionally, in some possible implementations of this application, the expected handover information includes content of at least one of the following information or a value of at least one of the following parameters:
an expected handover time, an expected handover location, an expected handover policy, an expected handover latency, and an expected rate of data transmission during handover, where each of the expected handover time, the expected handover location, the expected handover policy, the expected handover latency, and the expected rate of the data transmission during the handover may be understood as one type of information or parameter.

In some possible implementations, the expected handover information further includes at least one of the following:
movement information predicted by the terminal device, a power of the terminal device, and a state of energy of the terminal device, where each of the movement information predicted by the terminal device, the power of the terminal device, and the state of energy of the terminal device may be understood as one piece of information or parameter.

In some possible implementations, the expected handover information further includes at least one of the following:
handover reliability, a probability of the expected handover time, a probability of the expected handover location, a probability of the expected handover policy, a probability of the expected handover latency, a probability of the expected rate of the data transmission during the handover, and the like, where each of the handover reliability, the probability of the expected handover time, the probability of the expected handover location, the probability of the expected handover policy, the probability of the expected handover latency, and the probability of the expected rate of the data transmission during the handover may be understood as one type of information or parameter.

In some possible implementations, the processing unit 820 is configured to determine the expected handover information by using an artificial intelligence model and/or a sensing model.

In some possible implementations, before the transceiver unit 810 sends the expected handover information to the first network device, the transceiver unit 810 is further configured to receive indication information from the first network device, where the indication information indicates the terminal device to send the expected handover information to the first network device.

In some possible implementations, the indication information indicates a type of the expected handover information.

In some possible implementations, the indication information includes a first parameter, and the first parameter is for determining the expected handover information.

In some possible implementations, the first parameter includes a corresponding input parameter of the artificial intelligence model and/or a corresponding input parameter of the sensing model.

In some possible implementations, the processing unit 820 is further configured to determine the expected handover information by using the artificial intelligence model and/or the sensing model based on a value of the corresponding input parameter of the artificial intelligence model and/or a value of the corresponding input parameter of the sensing model.

In some possible implementations, the first parameter includes a corresponding output parameter of the artificial intelligence model and/or a corresponding output parameter of the sensing model.

In some possible implementations, the processing unit 820 is further configured to determine the expected handover information based on a value of the corresponding output parameter of the artificial intelligence model and/or a value of the corresponding output parameter of the sensing model.

In some possible implementations, the first parameter includes at least one of a location of the terminal device, a movement speed of the terminal device, a movement direction of the terminal device, the power of the terminal device, the state of energy of the terminal device, a channel state of the terminal device, and a service status of the terminal device.

In some possible implementations, the first information includes at least one of information about a resource for data transmission between the terminal device and the second network device, information about a time-frequency resource for monitoring downlink control information by the terminal device, and synchronization information; and
the processing unit 820 is further configured to communicate data and control information with the second network device based on the first information.

Optionally, in some possible implementations of this application, the synchronization information includes timing advance information.

Further, the communication apparatus 800 may further include a storage unit, and the transceiver unit 810 may be a transceiver, an input/output interface, or an interface circuit. The storage unit is configured to store instructions executed by the transceiver unit 810 and the processing unit 820. The transceiver unit 810, the processing unit 820, and the storage unit are coupled to each other. The storage unit stores the instructions. The processing unit 820 is configured to execute the instructions stored in the storage unit. The transceiver unit 810 is configured to perform specific signal receiving and sending under control of the processing unit 820.

It should be understood that, for a specific process in which the units in the communication apparatus 800 perform the foregoing corresponding steps, refer to the foregoing descriptions related to the terminal device with reference to the related embodiment in the method 500, the method 600, or the method 700. For brevity, details are not described herein again.

It should be understood that, the transceiver unit 810 may be the transceiver, the input/output interface, or the interface circuit. The storage unit may be a memory. The processing unit 820 may be implemented by a processor.

As shown in FIG. 9, a communication apparatus 900 may include a processor 910, a memory 920, a transceiver 930, and a bus system 940. Components of the communication apparatus 900 are coupled together through the bus system 940. The bus system 940 may further include a power bus, a control bus, a status signal bus, and the like in addition to a data bus. However, for clear description, various buses are all marked as the bus system 940 in FIG. 9. For ease of representation, FIG. 9 shows only an example.

The communication apparatus 800 shown in FIG. 8 or the communication apparatus 900 shown in FIG. 9 can implement the steps performed by the terminal device in any one of the method 500 to the method 700. For similar descriptions, refer to the descriptions in the foregoing corresponding method. To avoid repetition, details are not described herein again.

It should be further understood that the communication apparatus 800 shown in FIG. 8 or the communication apparatus 900 shown in FIG. 9 may be a terminal device.

FIG. 10 is a schematic block diagram of a communication apparatus 1000 according to an embodiment of this application. The communication apparatus 1000 may correspond to the first network device or the second network device described in the method 500 to the method 700, or may be a chip or a component used in the first network device or the second network device. Modules or units in the communication apparatus 1000 are separately configured to perform actions or processing processes performed by the first network device or the second network device in any one of the method 500 to the method 700.

As shown in FIG. 10, the apparatus 1000 may include a processing unit 1010 and a transceiver unit 1020. The transceiver unit 1020 is configured to perform specific signal receiving and sending under control of the processing unit 1010.

In some possible implementations, the transceiver unit 1020 is configured to receive a measurement report and expected handover information that is determined by a terminal device that are sent by the terminal device; and the processing unit 1010 is configured to determine, based on the measurement report and the expected handover information, to enable the terminal device to access a second network device.

In the communication apparatus provided in this application, in a process in which cell handover is performed on the terminal device, the terminal device reports, to the communication apparatus, the expected handover information determined by the terminal. When determining whether to perform handover, the communication apparatus makes a decision with reference to the expected handover information of the terminal device, so that a handover procedure can be more accurately controlled, to improve a success probability of the handover. For example, the communication apparatus can be enabled to more accurately determine a handover time, to more accurately control a sending time point of each piece of signaling in the handover procedure; and the communication apparatus can be enabled to select a handover policy that better matches the terminal device, to improve the success probability of the handover and efficiency of the handover.

In some possible implementations, the expected handover information includes content of at least one of the following information or a value of at least one of the following parameters: an expected handover time, an expected handover location, an expected handover policy, an expected handover latency, and an expected rate of data transmission during handover that are determined by the terminal device. Each of the expected handover time, the expected handover location, the expected handover policy, the expected handover latency, and the expected rate of the data transmission during the handover may be understood as one type of information or parameter.

In some possible implementations, the expected handover information further includes at least one of the following: movement information predicted by the terminal device, a power of the terminal device, and a state of energy of the terminal device. Each of the movement information predicted by the terminal device, the power of the terminal device, and the state of energy of the terminal device may be understood as one piece of information or parameter.

In some possible implementations, the expected handover information further includes at least one of the following:
handover reliability, a probability of the expected handover time, a probability of the expected handover location, a probability of the expected handover policy, a probability of the expected handover latency, a probability of the expected rate of the data transmission during the handover, and the like, where each of the handover reliability, the probability of the expected handover time, the probability of the expected handover location, the probability of the expected handover policy, the probability of the expected handover latency, and the probability of the expected rate of the data transmission during the handover may be understood as one type of information or parameter.

In some possible implementations, before the transceiver unit 1020 receives the measurement report sent by the terminal device, the transceiver unit 1020 is further configured to send indication information to the terminal device, where the indication information indicates the terminal device to send the expected handover information.

In some possible implementations, the indication information indicates the parameter or the information included in the expected handover information.

In some possible implementations, the indication information includes a first parameter, and the first parameter is used by the terminal device to determine the expected handover information.

In some possible implementations, the first parameter includes a corresponding input parameter of an artificial intelligence model and/or a corresponding input parameter of a sensing model.

In some possible implementations, the first parameter includes a corresponding output parameter of an artificial intelligence model and/or a corresponding output parameter of a sensing model.

In some possible implementations, the first parameter includes at least one of a location of the terminal device, a movement speed of the terminal device, a movement direction of the terminal device, the power of the terminal device, the state of energy of the terminal device, a channel state of the terminal device, and a service status of the terminal device.

In some possible implementations, first information includes at least one of information about a resource for data transmission between the terminal device and the second network device, information about a time-frequency resource for monitoring downlink control information by the terminal device, and synchronization information.

It should be understood that, for a specific process in which the units in the communication apparatus 1000 perform the foregoing corresponding steps, refer to the foregoing descriptions related to the first network device or the second network device with reference to the related embodiments in the method 500 to the method 700. For brevity, details are not described herein again.

Optionally, the transceiver unit 1020 may include a receiving unit (module) and a sending unit (module), configured to perform the steps of receiving information and sending information by the first network device or the second network device in embodiments in the method 500 to the method 700.

Further, the communication apparatus 1000 may further include a storage unit. The transceiver unit 1020 may be a transceiver, an input/output interface, or an interface circuit. The storage unit is configured to store instructions executed by the transceiver unit 1020 and the processing unit 1010. The transceiver unit 1020, the processing unit 1010, and the storage unit are coupled to each other. The storage unit stores the instructions. The processing unit 1010 is configured to execute the instructions stored in the storage unit. The transceiver unit 1020 is configured to perform specific signal receiving and sending under control of the processing unit 1010.

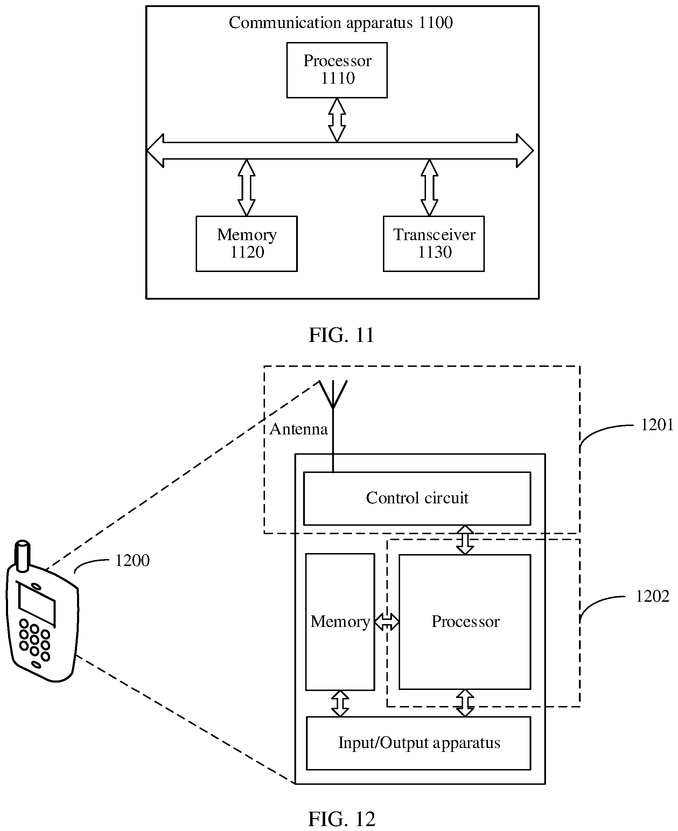

It should be understood that, the transceiver unit 1020 may be the transceiver, the input/output interface, or the interface circuit. The storage unit may be a memory. The processing unit 1010 may be implemented by a processor. As shown in FIG. 11, a communication apparatus 1100 may include a processor 1110, a memory 1120, and a transceiver 1130.

The communication apparatus 1000 shown in FIG. 10 or the communication apparatus 1100 shown in FIG. 11 can implement the steps performed by the first network device or the second network device in any one of the method embodiments in the method 500 to the method 700. For similar descriptions, refer to the descriptions in the foregoing corresponding method. To avoid repetition, details are not described herein again.

It should be further understood that the communication apparatus 1000 shown in FIG. 10 or the communication apparatus 1100 shown in FIG. 11 may be a network device.

It should be further understood that the division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, the units may be processing elements that are separately disposed, or may be integrated into a chip of the apparatus for implementation. In addition, the units may alternatively be stored in the memory in a form of a program, and are invoked by a processing element of the apparatus to perform functions of the units. The processing element herein may also be referred to as a processor, and may be an integrated circuit having a signal processing capability. In an implementation process, the steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing methods, for example, one or more application-specific integrated circuits (application-specific integrated circuit, ASIC), one or more DSPs, one or more field programmable gate arrays (field programmable gate arrays, FPGAs), or a combination of at least two of the integrated circuit forms. For another example, when a unit in the apparatus may be implemented in a form of a program scheduled by a processing element, the processing element may be a general-purpose processor, for example, a central processing unit (central processing unit, CPU) or another processor that can invoke the program. For another example, the units may be integrated and implemented in a form of a system-on-a-chip (system-on-a-chip, SoC).

FIG. 12 is a diagram of a structure of a terminal device 1200 according to this application. The communication apparatus 800 or the communication apparatus 900 may be configured in the terminal device 1200. Alternatively, the communication apparatus 800 or the communication apparatus 900 may be the terminal device 1200. In other words, the terminal device 1200 may perform an action performed by the terminal device in any one of the method 500 to method 700. Optionally, for ease of description, FIG. 12 shows only main components of the terminal device. As shown in FIG. 12, the terminal device 1200 includes a processor, a memory, a control circuit, an antenna, and an input/output apparatus.

The processor is mainly configured to process a communication protocol and communication data, control the entire terminal device, execute a software program, and process data of the software program, for example, configured to support the terminal device in performing the actions described in the foregoing embodiments of the cell handover methods. The memory is mainly configured to store the software program and the data, for example, store the expected handover information described in the foregoing embodiments. The control circuit is mainly configured to: perform conversion between a baseband signal and a radio frequency signal, and process the radio frequency signal. The control circuit and the antenna together may also be referred to as a transceiver, and are mainly configured to receive and send a radio frequency signal in a form of an electromagnetic wave, for example, send the expected handover information described in the foregoing embodiments. The input/output apparatus, for example, a touchscreen, a display, or a keyboard, is mainly configured to: receive data input by a user and output data to the user.

After the terminal device is powered on, the processor may read a software program in a storage unit, interpret and execute instructions of the software program, and process data of the software program. When data (for example, the foregoing expected handover information) needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data (for example, the foregoing handover configuration signaling and reconfiguration signaling) is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 12 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit are integrated into the processor in FIG. 12. A person skilled in the art may understand that the baseband processor and the central processing unit each may alternatively be an independent processor, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be embedded in the processor, or may be stored in the storage unit in a form of a software program. The processor executes the software program to implement a baseband processing function.

For example, in this embodiment of this application, the antenna and the control circuit that have a transceiver function may be considered as a transceiver unit 1201 of the terminal device 1200, and the processor having a processing function may be considered as a processing unit 1202 of the terminal device 1200. As shown in FIG. 12, the terminal device 1200 includes the transceiver unit 1201 and the processing unit 1202. The transceiver unit may also be referred to as a transceiver, a transceiver apparatus, or the like. Optionally, a component that is in the transceiver unit 1201 and that is configured to implement a receiving function may be considered as a receiving unit, and a component that is in the transceiver unit 1201 and that is configured to implement a sending function may be considered as a sending unit. That is, the transceiver unit 1201 includes the receiving unit and the sending unit. For example, the receiving unit may also be referred to as a receiver or a receiving circuit, and the sending unit may also be referred to as a transmitter or a transmitting circuit.

It should be understood that, in embodiments of this application, the processor may be a CPU, or the processor may be another general-purpose processor, a DSP, an ASIC, an FPGA, or another programmable logic device, a discrete gate or a transistor logic device, a discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an EPROM, an electrically erasable programmable read-only memory (electrically EPROM, EEPROM), or a flash memory. The volatile memory may be a random access memory (random access memory, RAM) that is used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a communication system. The communication system includes the foregoing terminal device, the foregoing first network device, and the foregoing second network device.

All or some of the foregoing embodiments may be implemented by using software, hardware, firmware, or any combination thereof. When software is used to implement the foregoing embodiments, the foregoing embodiments may be implemented completely or partially in a form of a computer program product. The computer program product includes one or more computer instructions or computer programs. When the computer instructions or the computer programs are loaded and executed on a computer, the procedure or function according to embodiments of this application is all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner.

An embodiment of this application further provides a computer-readable medium, configured to store computer program code. A computer program includes instructions for performing any cell handover method provided in the foregoing embodiments of this application. The readable medium may be the memory in the foregoing example. This is not limited in this embodiment of this application.

This application further provides a computer program product. The computer program product includes instructions. When the instructions are executed, a terminal device is enabled to perform operations of the terminal device corresponding to the foregoing methods, or network devices (including a first network device and a second network device) are enabled to perform operations of the network devices corresponding to the foregoing methods.

An embodiment of this application further provides a system chip. The system chip includes a processing unit and a communication unit. The processing unit may be, for example, a processor, and the communication unit may be, for example, an input/output interface, a pin, a circuit, or the like. The processing unit may execute computer instructions, so that a chip in a communication apparatus performs any cell handover method provided in the foregoing embodiments of this application.

Optionally, any communication apparatus provided in the foregoing embodiments of this application may include the system chip.

Optionally, the computer instructions are stored in a storage unit.

Optionally, the storage unit is a storage unit in the chip, for example, a register or a cache. Alternatively, the storage unit may be a storage unit that is in a terminal and that is located outside the chip, for example, a ROM or another type of static storage device that can store static information and instructions, or a RAM. The foregoing processor mentioned anywhere may be a CPU, a microprocessor, an ASIC, or one or more integrated circuits configured to control execution of a program for the foregoing master system information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to a same device.

The terms "system" and "network" are usually used interchangeably in this specification. In this specification, the term "and/or" describes only an association relationship between associated objects and represents that three relationships may exist. For example, A and/or B may represent the following three cases: Only A exists, both A and B exist, and only B exists. In addition, the character "/" in this specification generally indicates an "or" relationship between associated objects.

The term "uplink" or "downlink" in this application is for describing a data/information transmission direction in a specific scenario. For example, an "uplink" direction is usually a direction in which data/information is transmitted from a terminal to a network side, or a direction in which data/information is transmitted from a distributed unit to a central unit; and a "downlink" direction is usually a direction in which data/information is transmitted from a network side to a terminal, or a direction in which data/information is transmitted from a central unit to a distributed unit. It may be understood that "uplink" and "downlink" are merely for describing data/information transmission directions, without limiting a specific starting or ending device of data/information transmission.

In this application, names may be assigned to various objects such as messages/information/devices/systems/apparatuses/actions/operations/procedures. It may be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

It may be clearly understood by a person skilled in the art that, for the purpose of convenient and brief description, for a detailed working process of the foregoing systems, apparatuses, and units, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, the division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A cell handover method, wherein the method comprises:
sending, to a first network device, expected handover information and a measurement result that are determined by a terminal device; and
receiving first information sent by the first network device, wherein the first information is used by the terminal device to access a second network device.

2. The method according to claim 1, wherein the expected handover information comprises at least one of the following:
an expected handover time, an expected handover location, an expected handover policy, an expected handover latency, and an expected rate of data transmission during handover that are determined by the terminal device.

3. The method according to claim 1 or 2, wherein the expected handover information further comprises at least one of the following:
movement information predicted by the terminal device, a power of the terminal device, and a state of energy of the terminal device.

4. The method according to any one of claims 1 to 3, wherein the method further comprises:
determining the expected handover information by using an artificial intelligence model and/or a sensing model.

5. The method according to any one of claims 1 to 4, wherein before the sending, to a first network device, expected handover information, the method further comprises:
receiving indication information from the first network device, wherein the indication information indicates the terminal device to send the expected handover information to the first network device.

6. The method according to claim 5, wherein the indication information indicates a type of the expected handover information.

7. The method according to claim 5, wherein the indication information comprises a first parameter, and the first parameter is for determining the expected handover information.

8. The method according to claim 7, wherein the first parameter comprises a corresponding input parameter of the artificial intelligence model and/or a corresponding input parameter of the sensing model.

9. The method according to claim 8, wherein the method further comprises:
determining the expected handover information by using the artificial intelligence model and/or the sensing model based on a value of the corresponding input parameter of the artificial intelligence model and/or a value of the corresponding input parameter of the sensing model.

10. The method according to claim 7, wherein the first parameter comprises a corresponding output parameter of the artificial intelligence model and/or a corresponding output parameter of the sensing model.

11. The method according to claim 10, wherein the method further comprises:
determining the expected handover information based on a value of the corresponding output parameter of the artificial intelligence model and/or a value of the corresponding output parameter of the sensing model.

12. The method according to any one of claims 7 to 11, wherein the first parameter comprises:
at least one of a location of the terminal device, a movement speed of the terminal device, a movement direction of the terminal device, the power of the terminal device, the state of energy of the terminal device, a channel state of the terminal device, and a service status of the terminal device.

13. The method according to any one of claims 1 to 12, wherein the first information comprises at least one of information about a resource for data transmission between the terminal device and the second network device, information about a time-frequency resource for monitoring downlink control information by the terminal device, and synchronization information; and
the method further comprises:
communicating data and control information with the second network device based on the first information.

14. The method according to claim 13, wherein the synchronization information comprises timing advance information.

15. A cell handover method, wherein the method comprises:
receiving a measurement report and expected handover information that is determined by a terminal device that are sent by the terminal device;
determining, based on the measurement report and the expected handover information, to enable the terminal device to access a second network device; and
sending first information to the terminal device, wherein the first information is used by the terminal device to access the second network device.

16. The method according to claim 15, wherein the expected handover information comprises at least one of the following:
an expected handover time, an expected handover location, an expected handover policy, an expected handover latency, and an expected rate of data transmission during handover that are determined by the terminal device.

17. The method according to claim 15 or 16, wherein the expected handover information further comprises at least one of the following:
movement information predicted by the terminal device, a power of the terminal device, and a state of energy of the terminal device.

18. The method according to any one of claims 15 to 17, wherein before the receiving a measurement report sent by the terminal device, the method further comprises:
sending indication information to the terminal device, wherein the indication information indicates the terminal device to send the expected handover information.

19. The method according to claim 18, wherein the indication information indicates a type of the expected handover information.

20. The method according to claim 18, wherein the indication information comprises a first parameter, and the first parameter is used by the terminal device to determine the expected handover information.

21. The method according to claim 20, wherein the first parameter comprises a corresponding input parameter of an artificial intelligence model and/or a corresponding input parameter of a sensing model.

22. The method according to claim 20, wherein the first parameter comprises a corresponding output parameter of an artificial intelligence model and/or a corresponding output parameter of a sensing model.

23. The method according to any one of claims 20 to 22, wherein the first parameter comprises:
at least one of a location of the terminal device, a movement speed of the terminal device, a movement direction of the terminal device, the power of the terminal device, the state of energy of the terminal device, a channel state of the terminal device, and a service status of the terminal device.

24. The method according to any one of claims 15 to 23, wherein the first information comprises at least one of information about a resource for data transmission between the terminal device and the second network device, information about a time-frequency resource for monitoring downlink control information by the terminal device, and synchronization information.

25. The method according to claim 24, wherein the synchronization information comprises timing advance information.

26. A communication apparatus, comprising a unit configured to perform each step of the method according to any one of claims 1 to 14 or a unit configured to perform each step of the method according to any one of claims 15 to 25.

27. A communication apparatus, comprising at least one processor and an interface circuit, wherein the interface circuit is configured to input a signal and/or output a signal, and the at least one processor is configured to perform the method according to any one of claims 1 to 14 or the method according to any one of claims 15 to 25.

28. A computer-readable storage medium, wherein the computer-readable storage medium stores a computer program or instructions; and when a computer reads and executes the computer program or the instructions, the computer is enabled to perform the method according to any one of claims 1 to 14 or the method according to any one of claims 15 to 25.

29. A chip, comprising a processor, configured to invoke a computer program from a memory and run the computer program, to enable a communication device in which the chip is installed to perform the method according to any one of claims 1 to 14 or the method according to any one of claims 15 to 25.

30. A computer program, wherein when the computer program is run on a computer, the method according to any one of claims 1 to 14 or the method according to any one of claims 15 to 25 is enabled to be performed.

31. A computer program product comprising instructions, wherein when the instructions are run on a computer, the method according to any one of claims 1 to 14 or the method according to any one of claims 15 to 25 is enabled to be performed.

32. A communication system, comprising an apparatus configured to perform the method according to any one of claims 1 to 14 and an apparatus configured to perform the method according to any one of claims 15 to 25.
